# EUROPEAN PATENT SPECIFICATION

(11) **EP 2 514 174 B1**
(45) Date of publication and mention of the grant of the patent: **03.09.2014**
(21) Application number: 10791019.2
(22) Date of filing: 01.12.2010
(51) Int. Cl.: H04L 29/08

(54) **METHOD AND APPARATUS FOR DECOMPOSING A PEER-TO-PEER NETWORK AND USING A DECOMPOSED PEER-TO-PEER NETWORK**
VERFAHREN UND VORRICHTUNG ZUR ZERLEGUNG EINES PEER-TO-PEER-NETZWERKS UND VERWENDUNG EINES ZERLEGTEN PEER-TO-PEER-NETZWERKES
PROCÉDÉ ET APPAREIL POUR DÉCOMPOSER UN RÉSEAU D'HOMOLOGUE À HOMOLOGUE (P2P) ET UTILISER UN RÉSEAU D'HOMOLOGUE À HOMOLOGUE DÉCOMPOSÉ

(30) Priority: 17.12.2009 US 640049
(43) Date of publication of application: 24.10.2012
(73) Proprietor: ALCATEL LUCENT, 92100 Boulogne-Billancourt (FR)
(72) Inventor: CHU, Thomas, P., Englishtown NJ 07726 (US); NAGARAJAN, Ramesh, Princeton Junction NJ 08550 (US)
(74) Representative: Wetzel, Emmanuelle
(86) International application number: PCT/US2010/058480
(87) International publication number: WO 2011/075311

(56) References cited:
- US-A1- 2005 021 617
- XIAOLE BAI ET AL: "ICN: interest-based clustering network", PEER-TO-PEER COMPUTING, 2004. PROCEEDINGS. PROCEEDINGS. FOURTH INTERNA TIONAL CONFERENCE ON ZURICH, SWITZERLAND 25-27 AUG. 2004, PISCATAWAY, NJ, USA,IEEE, 25 August 2004 (2004-08-25), pages 219-226, XP010724986, DOI: DOI:10.1109/PTP.2004.1334950 ISBN: 978-0-7695-2156-5
- JÖRG EBERSPÄCHER , RÜDIGER SCHOLLMEIER , STEFAN ZÖLS , GERALD KUNZMANN: 'Structured P2P Networks in Mobile and Fixed Environments', [Online] 02 January 2004, pages 1 - 25 PROC. OF THE INTERNATIONAL WORKING CONFERENCE ON PERFORMANCE MODELING AND EVALUATION OF HETEROGENEOUS NETWORKS Retrieved from the Internet: <URL:http://www.cs.kau.se/cs/education/cour ses/dvad02/p2/seminar4/Papers/T4.pdf> [retrieved on 2013-03-27]

## Description

### FIELD OF THE INVENTION

The invention relates to the field of peer-to-peer (P2P) networks and, more specifically but not exclusively, to decomposing P2P networks into sub-networks.

### BACKGROUND

File sharing has been a focus of intense research and grass roots usage for some time. File sharing is enabled by file sharing approaches specifically designed for that purpose and implemented as different file sharing systems having file sharing protocols associated therewith. A number of different file sharing systems have been implemented, beginning with Napster and then proceeding through a number of generations of different file sharing systems, such as gnutella, Kazaa, eDonkey, Winny, and BitTorrent. In addition to these file sharing systems, new systems, such as Share and Perfect Dark, also are being developed. Collectively, these file sharing systems and associated protocols are referred to as peer-to-peer (P2P) file-sharing systems/protocols or, more simply, P2P file sharing applications. Furthermore, in addition to P2P file sharing applications, a new class of P2P applications, P2P television (P2PTV), is emerging which, architecturally, are different than the P2P file-sharing applications.

The popularity of P2P file sharing is evident from recent traffic studies. For example, a recent traffic study, by Ellacoya Networks, of one million broadband users within the United States, indicates that the breakdown of the major traffic types by volume is as follows: web (HTTP) - 46%; peer-to-peer (P2P) - 37%; newsgroup - 9%; non-HTTP streaming video - 3%; gaming - 2%; voice-over-IP (VoIP) - 1%; and other 1%. The main reason for the high volume of HTTP traffic is embedded video streaming traffic, such as traffic from YouTube, which accounts for 9.8% of the total traffic in above-mentioned study). However, P2P file sharing still is responsible for a large percentage of the traffic and, with the emergence of P2PTV, the amount of traffic is expected to increase drastically.

A majority of the existing P2P applications involve file sharing, however, a majority of the existing P2P applications involving file sharing, at least initially, were not entirely peer-to-peer. Rather, most existing P2P applications initially utilized a central server to coordinate activity between members of the P2P network. For example, in bitTorrent, while downloading of different pieces of information was peer-to-peer, a centralized server, referred to as the tracker in bitTorrent, was used to coordinate the activity of the bitTorrent application. Similarly, for example, many other P2P applications involving file sharing also had similar characteristics, such as Napster and eDonkey. The use of a central server, however, makes existing P2P applications vulnerable to congestion and failures and, further, makes existing P2P applications an attractive target to security threats.

In order to eliminate issues associated with use of centralized servers in P2P applications, new technologies have been proposed to eliminate the need for use of a centralized server with P2P applications. The most popular of these technologies is the distributed hash table (DHT). In DHT, each object is identified by an associated M-bit object identifier. The object identifier of an object is obtained by computing the hashed value of the name of the object using a consistent hash function (e.g., object identifier = f(object name), where f is a consistent hash function). The M-bit output field of the hash function is typically referred to as the key space, and the hash function maps the objects uniformly over the key space. There are a number of different P2P architectures that are based on DHT technology, such as Chord, Pastry, Tapestry, and the like, with Chord being the most popular of the DHT-based P2P architectures. For example, bitTorrent and eDonkey both support DHT.

In P2P networks, one of the design objectives is to accommodate a large number of nodes; however, at the same time, the search table at each of the nodes has to be relatively small. Using DHT, this objective is achieved by using a distributed search strategy in which the search table at each of the nodes is constructed in a cooperative manner so that a search request will eventually be routed, through a number of nodes if necessary, to its final target. In general, each DHT technology defines its own geometry (e.g., a Chord network is arranged as a ring) which typically dictates the structure of the search tables within the nodes and, further, specifies how nodes join and leave the network. In general, when a node joins a network, the node must announce its presence to its neighbors, create and populate its search table, and obtain files for which it is responsible. In general, when a node leaves a network, the node must inform its neighbors so that the neighboring nodes can be updated to reflect to the departure of the node, and must transfer any file for which it has responsibility. The nodes typically also send management and control messages to their respective neighbors periodically.

Disadvantageously, however, in most DHT technologies, such as Chord, the physical locations of the node (or the distances between them) are not accounted for in the architecture. As a result, messages and information, e.g., status messages and file transfers associated with node join/leave procedures, status and control messages exchanged between neighboring nodes, search messages associated with file searches, and the like, may traverse great geographical distances. Furthermore, although at least some DHT technologies attempt to incorporate the concept of "distance" between nodes using proximity metrics, such as Pastry, these DHT technologies still have disadvantages associated therewith, namely: (1) it is difficult to define a proximity metric that is easy to use, especially for large networks; and (2) the proximity metric should be a distance metric that satisfies the triangle inequality, however, most of the popular metrics, such as network hop, fail to satisfy the triangle inequality.

XIAOLE BAI, et. al disclose in "ICN: interest-based clustering network", PEER-TO-PEER COMPUTING, 2004. PROCEEDINGS. PROCEEDINGS. FOURTH INTERNATIONAL CONFERENCE ON ZURICH, SWITZERLAND 25-27 AUG. 2004, PISCATAWAY, NJ, USA,IEEE, 25 August 2004, pages 219-226, DOI: 10.1109/PTP.2004.1334950, ISBN: 978-0-7695-2156-5 interest-based clustering, wherein an upper network level is bound by de Bruijn graph. Nodes in a lower network level self-cluster based on interest. In this interest-based clustering P2P Network contents are classified and human interest is considered for clustering.

JÖRG EBERSPACHER, et.al. disclose in: 'Structured P2P Networks in Mobile and Fixed Environments', [Online] 02 January 2004, pages 1-25 PROC. OF THE INTERNATIONAL WORKING CONFERENCE ON PERFORMANCE MODELING AND EVALUATION OF HETEROGENEOUS NETWORKS) a content addressable network (CAN), wherein topologically close nodes have the same landmark ordering and are located in the same portion of the coordinate space and wherein decomposition of a global P2P network is performed by grouping nodes into sub-networks based on the continent on which the node is located.

US 2005/021617 A1 discloses a method for a method for creating a directory service in a scalable P2P-network. The directory service is distributed, wherein each group contains at least one peer. Assignment values are formed to release resources and/or to search for resources, wherein the assignment values are formed from a predefined address space using an assignment specification which depends on the resource. Only one group is made responsible for each assignment value. A release of a resource and/or a search is transferred for a resource only to the group responsible.

### SUMMARY

The object of the present invention is achived with the methods according to claims 1 and 9, respectively.

Various deficiencies in the prior art are addressed by embodiments that support a peer-to-peer (P2P) network decomposition capability in which a P2P network is decomposed into a plurality of sub-networks. A capability is provided for decomposing a P2P network to form a decomposed P2P network including a plurality of sub-networks and, further, for using the decomposed P2P network. A P2P network is decomposed to form a plurality of sub-networks, where each of the sub-networks is a P2P network. A P2P network is decomposed into sub-networks based on one or more decomposition criteria (e.g., geographic location, community of interest, and the like, as well as various combinations thereof), wherein the one or more decomposition criteria are based on at least one of geographic locations of nodes. The decomposition of the P2P network is encoded in a network map. A node may use the network map to join the decomposed P2P network. A node may join one, some, or all of the sub-networks. The sub-networks of a decomposed P2P network may be arranged in any suitable number of hierarchical levels.

### BRIEF DESCRIPTION OF THE DRAWINGS

The teachings herein can be readily understood by considering the following detailed description in conjunction with the accompanying drawings, in which:
FIG. 1 depicts an exemplary Chord network;
FIG. 2 depicts an exemplary decomposition of the exemplary Chord network of FIG. 1 into a control network and five sub-networks;
FIG. 3 depicts one embodiment of a method for use by a node in causing a file to be stored within a decomposed P2P network;
FIG. 4 depicts one embodiment of a method for use by a node in locating a file stored within a decomposed P2P network;
FIG. 5 depicts one embodiment of a method for use by a node in joining a sub-network of a decomposed P2P network;
FIG. 6 depicts one embodiment of a method for use by a node in leaving a decomposed P2P network;
FIG. 7 depicts one embodiment of a method for use by a node in executing changes based on a change in the network map of a decomposed P2P network;
FIGs. 8A - 8E depict an example showing a process by which files may be transferred from a first sub-network to a second sub-network;
FIG. 9 depicts one embodiment of a method for enabling a node of first sub-network to acquire files from a second sub-network when initializing a Chord sub-network in a decomposed Chord network; and
FIG. 10 depicts a high-level block diagram of a general-purpose computer suitable for use in performing the functions described herein.

To facilitate understanding, identical reference numerals have been used, where possible, to designate identical elements that are common to the figures.

### DETAILED DESCRIPTION OF THE INVENTION

A peer-to-peer (P2P) network decomposition capability is depicted and described herein. The P2P network decomposition capability enables a P2P network to be decomposed to form a decomposed P2P network including a plurality of sub-networks, where each of the sub-networks also operates as a P2P network. The P2P network decomposition capability enables use of a decomposed P2P network.

Although primarily depicted and described herein with respect to a Chord network, the P2P network decomposition capability may be utilized for decomposing any P2P network utilizing any suitable P2P technology, such as Pastry networks, Tapestry networks, and the like, as well as combinations thereof.

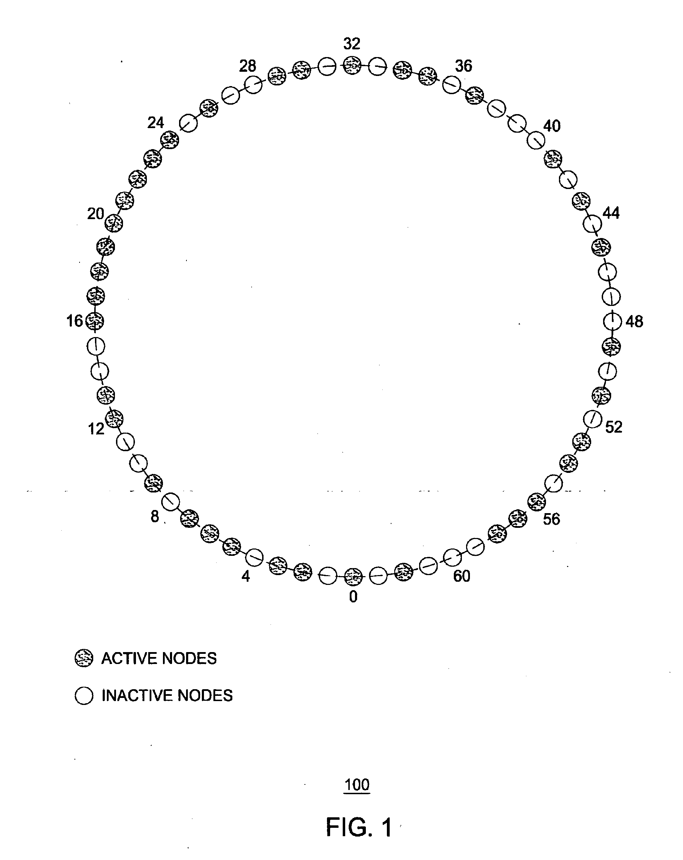

FIG. 1 depicts a high-level block diagram of an exemplary Chord network. As depicted in FIG. 1, exemplary Chord network 100 includes a plurality of nodes 110 that are logically arranged in a ring configuration. The nodes 110 each store files which may be shared among the nodes 110. The nodes 110 include any suitable types of nodes that may participate in a Chord network. For example, nodes 110 may include computers, phones, and the like. The nodes 110 each are configured to provide various functions of the P2P network decomposition capability depicted and described herein. The decomposition of Chord network 100 using the P2P network decomposition capability may be better understood by first considering the general operation of Chord networks in conjunction with exemplary Chord network 100 of FIG. 1.

In Chord, the nodes of the Chord network have network connectivity via a packet-based network (e.g., such as an IP network or any other suitable network), and Chord forms an overlay network over the underlying packet-based network.

In Chord, the number of nodes which may participate in the Chord network is based on the size of the key space (address space) of the Chord network. In general, the key space is M bits, where M may be any suitable number. For example, a typical key space used in Chord networks is provided using a 160 bit implementation, making the size of the key space equal to 2¹⁶⁰ or ~ 1.45*10⁴⁸. A consistent hash function is used to map inputs to 160-bit values (i.e., to map inputs into the key space). The outputs from the hash function are mapped uniformly onto the key space. It will be appreciated that any suitable hash function may be used, such as the Secure Hash Algorithm (SHA-1), the Message Digest Algorithm 5 (MD5), and the like. The outputs of the hash function, when mapped onto the key space, provide the set of node IDs which are used to logically arrange the nodes within the Chord network.

In Chord, the active nodes (existing nodes participating in the Chord network) and the inactive nodes (potential nodes which may join the Chord network) are arranged logically in a circle in the order of the node IDs of the nodes. Chord imposes an order in the circle, in the direction of increasing node ID values with wraparound. In Chord, connectivity between the active nodes of the Chord network is logical connectivity between adjacent ones of the active nodes in the circle (as inactive nodes are not connected to the Chord network and, thus, are merely potential nodes which may join the Chord network as active nodes). In this manner, from the perspective of a target active node in the Chord network: (1) the next active node on the circle that has a node ID that is greater than the node ID of the target node is a successor of the target active node, and (2) the next active node on the circle that has a node ID that is less than the node ID of the target node is a predecessor of the target active node.

In FIG. 1, the key space of the Chord network is 6 bits (providing for 64 nodes, which are numbered consecutively, in a clockwise fashion, from node ID 0 to node ID 63). In FIG. 1, nodes 0, 2 - 3, 5 - 7, 9, 12 - 13, 16 - 24, 26, 29 - 30, 32, 34 - 35, 37, 41, 43, 45, 49, 51, 53 - 54, 56 - 58, and 62 are active, and the remaining nodes are inactive (both active and inactive nodes are displayed for purposes of clarity). In FIG. 1, the logical connectivity between the active nodes of Chord network 100 indicates that node 0 is connected to node 2, node 2 is connected to node 3, node 3 is connected to node 5, and so forth, with node 62 being connected to node 0 to complete the circle. As Chord imposes an order in the circle, using increasing values in the clockwise direction with wraparound, node 2 is referred to as a successor of node 0 and node 62 is referred to as a predecessor of node 0, node 3 is referred to as a successor of node 2 and node 0 is referred to as a predecessor of node 2, and so forth.

As described herein, Chord networks support file-sharing, where each file to be shared is stored on one or more of the active nodes of the Chord network. In Chord, the filename of a file is hashed into the same key space that is used for identifying the nodes of the Chord network, using the same hash function that is used for identifying the nodes of the Chord network. The hashed output from hashing the filename is the file identifier for the file. Thus, for a Chord network with key space of 160 bits, for example, the Chord network can potentially accommodate 1.45*10⁴⁸ files. In Chord, a file is stored at a node that has a node ID that matches the file ID of the file if that node is active, and if that node is not active then the file is stored at the first active node having a node ID greater than the file ID.

In FIG. 1, Chord network 100 can accommodate 64 total files, which will be stored as follows: node 0 stores files 0 and 63; node 2 stores files 1 and 2; node 3 stores file 3; node 5 stores files 4 and 5; node 6 stores file 6; node 7 stores file 7; node 9 stores files 8 and 9; node 12 stores files 10, 11, and 12; node 13 stores file 13, node 16 stores file 14, 15, and 16; node 17 stores file 17; node 18 stores file 18; node 19 stores file 19; node 20 stores file 20; node 21 stores file 21; node 22 stores file 22; node 23 stores file 23; node 24 stores file 24; node 26 stores files 25 and 26; node 29 stores files 27, 28, and 29; node 30 stores file 30; node 32 stores files 31 and 32; node 34 stores files 33 and 34; node 35 stores file 35; node 37 stores files 36 and 37; node 41 stores files 38, 39, 40, and 41; node 43 stores files 42 and 43; node 45 stores files 44 and 45; node 49 stores files 46, 47, 48, and 49; node 51 stores files 50 and 51; node 53 stores files 52 and 53; node 54 stores file 54; node 56 stores files 55 and 56; node 57 stores file 57; node 58 stores file 58; node 62 stores files 59, 60, 61, and 62.

In a most basic implementation, only one copy of any given file is stored in the Chord network (due to the use of the same hash function for assigning node IDs and file IDs; however, different methods may be employed to store multiple copies of a file within the Chord network (e.g., for resiliency in the case of node failures, load-balancing, and the like).

In one embodiment, for example, multiple versions of a file may be stored in the Chord network by assigning slightly different filenames to multiple copies of the file using an agreed upon naming convention. For example, if the name of a file is "abc", an extension such as "-n" can be added to the filename representing the same file. In this example, multiple copies of the file can be stored under the names "abc", "abc-1", "abc-2", and so forth. In this manner, since the multiple file names for the "abc" file are not identical, hashing of the different file names will result in different hash outputs and, thus, different file IDs, thereby causing the multiple copies of the file to be stored in different nodes of the Chord network.

In one embodiment, for example, multiple versions of a file may be stored in the Chord network by using multiple independent hash functions to generate multiple file IDs for the file using the filename (rather than the implementation described hereinabove in which a single consistent hash function is used). In this embodiment, a node that is seeding a file into the Chord network determines each of the possible file IDs of the file using the hash functions, and inserts multiple copies of the file into the Chord network using the file IDs. In this embodiment, a node that is searching for a file in the Chord network will determine all of the possible file IDs of the file (by hashing the filename using each of the hash functions) and can then search for the file using the determined file IDs, sequentially or in parallel.

With respect to storage of multiple versions of a file in the Chord network, it will be appreciated that multiple versions of a file may be stored in the Chord network in any other suitable manner.

As described herein, Chord enables nodes to share files. In order to enable nodes of the Chord network to share files, each node of the Chord network needs to be able to search for and ultimately determine the location of a desired file in order to be able to obtain the desired file.

In Chord, each node maintains a search table. For a Chord network with a M-bit key space, each node N will maintain a search table having M entries, where the entries of the search table are referred to as "fingers". In the search table for node N, the i^{th} finger points to the first node on the circle that is at least 2ⁱ⁻¹ away from N. In general, unless otherwise indicated, the term "i^{th} finger" will be used to denote the node that is pointed to by the i^{th} entry of the search table. For example, in Chord network 100, the 3^{rd} finger of node 0 is node 5.

The search tables of the nodes, collectively, provide an efficient global search algorithm by which the location(s) of an object within the Chord network may be determined.

In FIG. 1, the key space is 6 bits, and, thus, each node has 6 fingers in its search table. In FIG. 1, the search table on node 0 may be represented as indicated in Table 1, which follows:

**Table 1**

| Finger | 2ⁱ⁻¹ | First node ≥ 2ⁱ⁻¹ |
|---|---|---|
| 1 | 1 | 2 |
| 2 | 2 | 2 |
| 3 | 4 | 5 |
| 4 | 8 | 9 |
| 5 | 16 | 16 |
| 6 | 32 | 32 |

In Chord, the network is dynamic. As new nodes join the Chord network and existing nodes leave the Chord network, the search tables at the active nodes of the Chord network may be affected. As such, in Chord, each active node K will update its associated search table periodically. An active node K may update it search table in any suitable manner. For example, an active node K may update its search table by searching for node (K+2ⁱ⁻¹), because the result from performing this search would be the value for the i^{th} finger of the search table. It will be appreciated that active nodes of a Chord network may update their search tables in any other suitable manner.

In Chord, in addition to the search table, each node also stores the identities of its successor and its predecessor in the ring. This information is used for ring maintenance, such as when new nodes join the network and existing nodes leave the network, as well as when nodes recover from failure. In some Chord networks, in order to guard against the situation in which there are multiple concurrent node failures, a node may store the identities of its N successors and its N predecessors in the ring.

In Chord, nodes of the Chord network can search for and obtain files from other nodes of the Chord network. The Chord network supports a search algorithm by which nodes may search for files available from other nodes in the Chord network. The operation of the Chord search algorithm may be illustrated through an example using Chord network 100 of FIG. 1. In this example, assume that node 2 wants to search for file 0 in Chord network 100 of FIG. 1. Node 2 will access its search table in order to select one of the other nodes to which to send a file request. Since, from the perspective of node 2, the file ID of the target file (namely, file 0) is greater than the value of the largest finger of node 2 (namely, node 34) due to wraparound, node 2 will send a file request to node 34 requesting that node 34 search for file 0. Node 34 receives the file request from node 2. Node 34, since it is not storing file 0, will access its search table in order to select one of the other nodes to which to forward the file request. In node 34, the search table includes six fingers, pointing to nodes 35, 37, 40, 43, 51, and 2. Since the object ID of file 0 is between the 5^{th} and 6^{th} fingers (node 51 and node 2, respectively), node 34 forwards the search request to the node identified by the 5^{th} finger (node 51). Node 51 receives the file request from node 34. Node 51, since it is not storing file 0, will access its search table in order to select one of the other nodes to which to send the file request. In node 51, the search table includes six fingers, pointing to nodes 53, 53, 56, 62, 3, and 19. Since the object ID of file 0 is between the 4^{th} and 5^{th} fingers (node 62 and node 3, respectively), node 51 forwards the search request to the node identified by the 4^{th} finger (node 62). Node 62 receives the file request from node 51. Node 62, since it is not storing file 0, will access its search table in order to select one of the other nodes to which to send the file request. In node 62, the search table includes six fingers, pointing to nodes 0, 0, 2, 6, 16, and 30. Since the object ID of file 0 is indicated in both the 1^{st} and 2^{nd} fingers (node 0), node 62 knows that node 0 is active and forwards the search request to node 0. The file 0 is then returned to node 2. For example, the file 0 may then be provided directly from node 0 to node 2 (e.g., where the search requests include the IP address of node 2), or may be propagated back along the route followed by the file request (i.e., from node 0 to node 62 to node 51 to node 34 to node 2). Thus, from this example, it is clear that, in Chord, all of the nodes in Chord network cooperating to support the Chord searching algorithm.

In Chord, the Chord network is dynamic, as nodes may join the Chord network and leave the Chord network at any time. When nodes join and leave the Chord network, files are transferred between nodes. For example, a joining node may assume responsibility for storing at least the file having the same file ID as the node ID of the joining node (and, potentially, other files as well), while a leaving node may transfer responsibility for storing one or more files to another node. The procedures associated with joining and leaving a Chord network are described in additional detail hereinbelow.

In the Chord join procedure, when a node wants to join a Chord network, the joining node determines its node ID. The joining node determines its node ID by hashing its name into a key value. For example, if the name of the node is node-xyx@company-abc.com, the node ID would be the output of SHA-1(node-xyx@company-abc.com) where, for simplicity, we are assuming that the hash function is SHA-1 (although any suitable hashing function may be used). In this example, let the node ID for this node, as determined from the hashing operation, be K.

In the Chord join procedure, the joining node K then contacts an active node of the Chord network (denoted as an initialization node). At first glance, this initialization node may appear to be a centralized server, however, this is not the case as: (a) the initialization node can be any node that is currently active in the Chord network (e.g., if node K1 and node K2 want to join the Chord network at the same time, they could, and would likely, use different active nodes as their respective initialization nodes to join the network) and (b) the initialization node does not need to provide any special capability in addition to the basic capabilities (i.e., it can behaves just like any other node in the Chord network). The node K can obtain a list of potential candidate initialization nodes in any suitable manner (e.g., from one or more previous search tables, successor lists and/or processor lists on joining node K, from information administratively configured within joining node K, from a website, and the like). In this example, let the node ID of the initialization node be L.

In the Chord join procedure, joining node K then sends a request that initialization node L search for joining node K (i.e., search for an object with ID = K). At this point, two events may occur:
(A) Node L replies to joining node K with a value of N. Node N will be the node, among all active nodes, having a node ID that is just larger than K associated with joining node K. Thus, if joining node K is to join the Chord network, node N should be the successor node for joining node K. Node K then contacts node N and asks node N for the identity of the predecessor node of node N. In this example, let the predecessor of node N be denoted as node N-. The node N provides the value of N- to joining node K. Based on this information, node K then knows that it must insert itself into the Chord network between node N and node N-.
(B) Node L replies to joining node K with a value of K. This means that there is another node having a node ID of K that is already active within the Chord network. While this case is extremely unlikely in most Chord networks (e.g., in Chord network 100, which is a 160 bit key space, the odds of this situation occurring are 1 in 1.45*10⁴⁸), it is possible. This situation can be addressed by having joining node K changing its own name slightly (e.g., adding a timestamp, adding a number, and the like) and using the new node name to generate a different node ID (denoted as K'). The joining node K' can start the process again by sending a new search request to initialization node L (i.e., a request that initialization node L search for joining node K').

In the Chord join procedure, following a determination of the insertion point for the joining node K, processing is performed for inserting the joining node within the Chord network. The joining node K is being inserted between node K- (the candidate predecessor of K) and node K+ (the candidate successor of K), where at this time, before node K joins the network, node K+ is the successor of node K-. The joining node K contacts successor node K+ indicating that it would like to join the Chord network. The successor node K+ then (1) informs joining node K that its predecessor is node K-, (2) begins transferring to joining node K any files for which node K should have responsibility (namely, files having file IDs of (K-)+1 through K), and (3) informs its predecessor node K- that joining node K is in the process of joining the Chord network. After the file transfer is complete, joining node K establishes a connection with predecessor node K-. After the connection between joining node K and predecessor node K- is established, joining node K informs successor node K+ that is has successfully joined the Chord network. The successor node K+ then breaks the connection with predecessor node K-, and both successor node K+ and predecessor node K-update their predecessor and successor lists.

In the Chord leave procedure, processing is performed for enabling the leaving node K to leave the Chord network in a controlled manner. The node K that is leaving has a predecessor node (denoted as node K-) and a successor node (denoted as node K+) associated therewith. The leaving node K contacts both the predecessor node K- and the successor node K+, informing both that it intends to leave the Chord network, and providing both nodes with the identity of the other. The leaving node K then transfers to successor node K+ all of the files that leaving node K is currently storing on behalf of the Chord network (i.e., all files having file IDs between (K-)+1 and K, including K). After the transfer of files is complete, joining node leaves the Chord network by disconnecting from predecessor node K- and successor node K+. Nodes K- and K+ then establish a connection therebetween (which may be initiated by either of them). Nodes K- and K+ also update their predecessor and successor lists.

In addition to use of the Chord join procedure and the Chord leave procedure for enabling dynamic changes to the Chord network, Chord also supports a Chord recovery procedure for enabling recovery from node failures (i.e., the Chord leave and Chord join procedures are not used for recovering from node failures). The nodes of a Chord network periodically send heartbeat messages to their predecessor and successor nodes, respectively, thereby enabling the nodes of the Chord network to detect node failures quickly. In general, the heartbeat message from a node will include the identities of the predecessor and successor nodes of the node from which the heartbeat message originates. In this manner, when a node receives a heartbeat message from its successor node it knows the identity of the successor node of its successor node and, thus, when the successor of a node fails, the node can initiate a connection to the successor node of its successor node and the Chord ring is maintained. As noted above, in some Chord networks, nodes maintain lists of k predecessors and k successors. In this case, the Chord network can recover from failures of k-1 successive nodes. In this case, even for a small value of k, the odd of the failure of k successive nodes is very small. In some such Chord networks, the value for k may be determined as 2*log₂(L), where L is average number of active nodes in the network (i.e., a Chord that usually has 100,000 active nodes, k would be ~ 34).

The above-described Chord recovery procedure enables the Chord network to be repaired in the event of node failures, however, files that are stored at the failed nodes are lost. This problem may be addressed in a number of ways.

In one embodiment, this problem is addressed by storing multiple copies of files within the Chord network. Two such methods are described hereinabove. While this method provides additional resiliency, it requires a k-fold increase in storage capacity on each of the nodes of the Chord network.

In another embodiment, this problem is addressed by enabling nodes that obtain files to voluntarily become seed nodes for the files. A description of one such embodiment follows. A file is originally introduced into the Chord network by a member of the Chord network (where the member node is referred to as a seed node of the file). The seed node obtains the hashed value of the filename (i.e., the file ID), and searches for the node having the same node ID as the file ID. The seed node will locate the first active node in the Chord network that has a node ID that is equal to or greater than the file ID. The seed node sends the file to the located node. Then other nodes of the Chord network which obtain the file at a later time may voluntarily become seed nodes for the file. A seed node for a file will periodically search for that file in the Chord network and, if the seed node fails to locate the file, it will send the file to the appropriate node as described above. In this manner, "lost" files are recovered in the Chord network.

As described herein, the P2P network decomposition capability enables a P2P network to be decomposed into a plurality of sub-networks, forming thereby a decomposed P2P network. In a decomposed P2P network, each of the sub-networks operates as a P2P network and, thus, supports some or all of the capabilities of P2P networks as described hereinabove. A description of various embodiments associated with decomposition of a P2P network to form a decomposed P2P network, and use of a decomposed P2P network, follows.

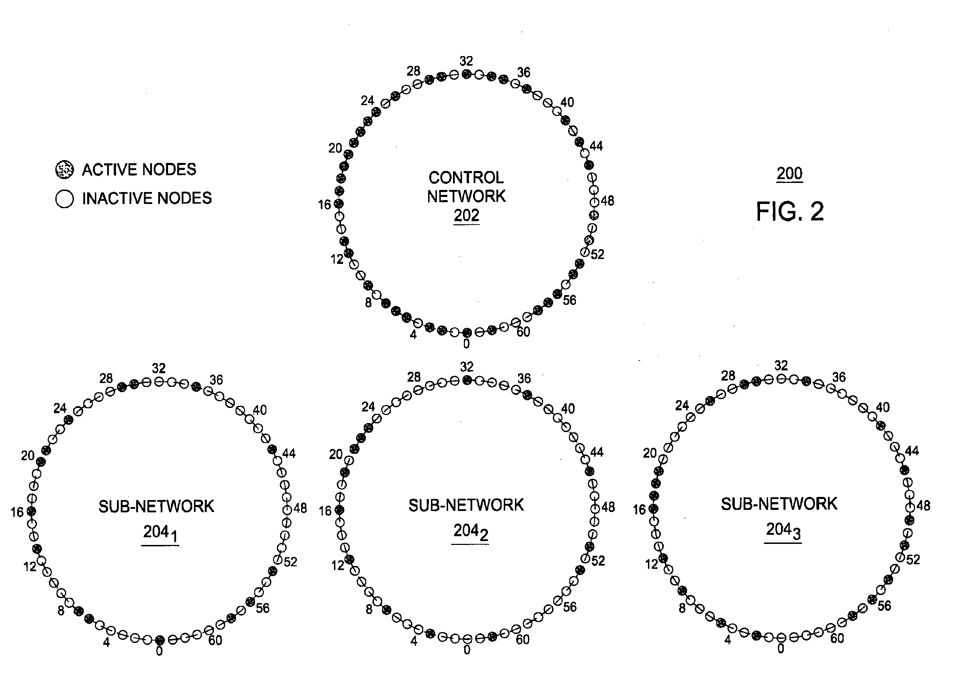

FIG. 2 depicts an exemplary decomposition of the exemplary Chord network of FIG. 1 into sub-networks.

As depicted in FIG. 2, decomposition of Chord network 100 into decomposed Chord network 200 involves forming a control network 202 and a plurality of sub-networks 204₁ - 204₅ (collectively, sub-networks 204).

In a decomposed P2P network, each of the sub-networks uses the same key space (M bits) and the same key space hash function (denoted as f(x)).

In one embodiment of a decomposed P2P network, the decomposed P2P network has a set of sub-network indices associated therewith. The sub-network index is a K-bit field, and the sub-network indices of the decomposed P2P network are determined using a sub-network index hash function (denoted as g(x)) which maps input strings to a K-bit value, thereby producing 2^{K} sub-network indices for the decomposed P2P network. In a decomposed P2P network, each sub-network index is assigned to at least one of the sub-networks and each sub-network has at least one sub-network index assigned thereto. The sub-network index hash function is used to compute the sub-network index of an object (node or file), i.e., the sub-network index of a node is determined as g(node name) and the sub-network index of a file is determined as g(filename).

In one embodiment of a decomposed P2P network, the key space hash function f(x) and the sub-network index hash function g(x) should be chosen such that they are statistically uncorrelated. In one embodiment, the key space hash function f(x) and the sub-network index hash function g(x) are configured by selecting a hash function (denoted as h(x)) having an output of J bits, where J is an integer greater than or equal to M + K. In this embodiment, given an object (node or file), h(object name) is computed, thereby resulting in a J bit value where the K most significant bits are used to identify the sub-network for the object (g(object name)) and the M least significant bits are used to identify the object within the sub-network (f(object name)).

In a decomposed P2P network, a network map is formed in order to maintain information adapted for use by nodes in joining, operating within (e.g., storing files, locating files, and the like), and leaving the decomposed P2P network.

In one embodiment, the network map of the decomposed P2P network includes the mappings of the sub-network indices of the decomposed P2P network to the sub-networks of the decomposed P2P network. The network map provides, for each of the sub-networks, a mapping of the sub-network to at least one sub-network index which identifies the sub-network.

In one embodiment, the network map of the decomposed P2P network also may include hashing information, such as the identity of the key space hash function (f(x)) and the associated size of the key space, the identity of the sub-network index hash function (g(x)) and the associated size of the index, and the like, as well as various combinations thereof.

In one embodiment, the network map of the decomposed P2P network may include other information adapted for use by nodes in joining, operating within, and leaving the decomposed P2P network, such as descriptors for use by nodes in determining which sub-networks to join, network map management information for use by an administrator(s) of the network map to manage the network map, and the like, as well as various combinations thereof.

In a decomposed P2P network, the control network enables nodes of the decomposed P2P network to search for nodes, services, and other control information. Thus, for each node of the network, the node must join the control network before the joining any of the sub-networks and, similarly, must leave each of the sub-network(s) to which the node belongs before leaving the control network. As indicated above, the control network uses the same key space as each of the sub-networks. In general, the control network will not be used to store any objects or files and, thus, the overhead associated with joining the control network and leaving the control network is relatively low. The control network may be implemented using any P2P technology suitable for providing an ability for nodes to search over the decomposed P2P network for "services" (e.g., to search for nodes that satisfy a specific criteria, such as for nodes that belong to a particular sub-network). In one embodiment, for example, the control network is implemented as a Chord network. In one such embodiment, for example, the control network is implemented as a Chord network supporting a service location capability, such as the service location capability depicted and described in U.S. Patent Application Serial No. XX/XXX,XXX [Attorney Docket No. Chu 19-43 (ALU/130209)], entitled "METHOD AND APPARATUS FOR LOCATING SERVICES WITHIN PEER-TO-PEER NETWORKS," which is hereby incorporated by reference herein in its entirety. It will be appreciated that, where other types of P2P technologies support such service location capabilities, these other types of P2P technologies also can be used to implement the control network.

As described hereinabove, the control network may be used by nodes to search for other nodes, search for services, obtain other control information, and the like, as well as various combinations thereof. The capabilities enabled by the control network may be better understood by considering the following exemplary uses of the control network.

As an example, assume that a node A wants to contact a node B, but, in a decomposed network, node A would not know the sub-network(s) of which node B is a member. However, although node A does not know the sub-network(s) of node B, node A can initiate a search for node B within the control network, because as long as node B is active, node B will be a part of the control network. After node A locates node B using the control network, node A can then contact node B and request pertinent contact information and capabilities information from node B (e.g., the sub-network(s) of which node B is a member, the IP address of node B, capabilities of node B, and the like).

As an example, assume that a node A wants to join sub-network X. In most P2P networks, node A would need to contact a node which is already a member of sub-network X in order to initiate the process to join sub-network X. In this example, node A may use a service location search capability to search the control network for any node which is a member of sub-network X. Then, upon identifying one of the nodes which is a member of sub-network X, node A may initiate the process to join sub-network X.

As an example, assume that a node A wants to utilize a particular service provided by the P2P network. In this example, node A may use a service location search capability to search the control network for any node that supports the service. Similarly, in this example, node A may use a service location search capability to search for the service in a particular sub-network. Then, upon identifying the availability of the service, node A may initiate a request for the service.

As an example, assume that a node A joins the control network. In this example, after joining the control network, node A will exchange messages with its neighbors in the control network. The exchanged messages may be used by node A to acquire the current network map (if node A does not already have a current version of the network map). In this example, node A may then used the network map to perform other functions within the decomposed network.

Although primarily described with respect to specific exemplary uses of the control network, it will be appreciated that the control network of the decomposed network may be used to perform other functions.

In a decomposed P2P network, the decomposition of the P2P network into sub-networks may be based on any suitable decomposition criteria. For example, decomposition of a P2P network into sub-networks may be based on one or more of the following criteria: the geographic locations of the nodes of the P2P network, the communities of interest of the users of the nodes of the P2P network, and the like, as well as various combinations thereof.

The decomposition of a P2P network based on the geographic locations of the nodes of the P2P network is performed in a manner tending to reduce or minimize geographic distances between nodes belonging to the same sub-network. This reduces or minimizes the distance traversed by messages and information exchanged between nodes of the decomposed P2P network (e.g., when nodes join and leave the network, heartbeat messages, when files are transferred, and the like), thereby reducing delay associated with exchanging messages and information, reducing network resources consumed by exchanging messages and information, and providing other benefits. These benefits may be better understood by considering a simple example of an exemplary global P2P network having active nodes around the world.

In this example, assume that the global P2P network is not decomposed, and further assume that one of the nodes of the P2P that is located in New York City has a predecessor that is located in Tokyo and a successor that is located in Sydney. In this example, when the node in New York City joins the P2P network and leaves the P2P network, messages exchanged with its predecessor and successor, which will include a number of file transfers, must travel around the world. Similarly, in this example, when the node in New York City exchanges heartbeat messages with its predecessor and successor, the heartbeat messages also must travel around the world. Similarly, in this example, when executing a search from the node in New York City, the next node may be located in Tokyo, with the next node back in New York City, with the next node in South America, and so forth, such that search messages may travel extremely long distances.

In this example, the situation can be improved by decomposing the P2P network into sub-networks where, for each of the sub-networks, nodes that belong to that sub-network are geographically proximate to each other relative to other nodes of the P2P network. In this example, assume that the P2P network is decomposed into multiple sub-networks including a sub-network for nodes located in Japan and a sub-network for nodes located in the New York City area. In this example, following decomposition of the P2P network, rather than having its predecessor and successor in Tokyo and Sydney, the node in New York City will have other nodes in the New York City area as its predecessor and successor. Similarly, in this example, following decomposition of the P2P network, searches can be localized within the sub-networks (assuming the file being requested in available locally) and localized within geographically adjacent sub-networks (again, assuming the file being requested in available), before there is any need for searches to be executed over long distances. In this manner, the distance traveled by any messages/information exchanged by the node in New York City is drastically reduced.

The decomposition of a P2P network based on the geographic locations of the nodes of the P2P network may be performed at any suitable granularity. For example, decomposition of a global P2P network may be performed by grouping nodes into sub-networks based on the continent on which the node is located. For example, decomposition of a national P2P network may be performed by grouping nodes into sub-networks based on the locations of the node within the country (e.g., using three sub-networks for the Eastern US, Central US, and Western US; using fifty sub-networks for the 50 states, and the like, as well as various combinations thereof). For example, decomposition of a P2P network including nodes are located within New York City may be performed by grouping nodes into sub-networks based on the borough in which the node is located. From these examples, it will be appreciated that nodes may be geographically grouped into sub-networks using any suitable granularity.

The decomposition of a P2P network based on the geographic locations of the nodes of the P2P network at a particular granularity may be performed based on the numbers of nodes in geographic regions. For example, consider a P2P network that covers the continental United States. In this example, populous states with more nodes (e.g., New York, California, and the like) each may be decomposed into multiple sub-networks, whereas multiple less populous states with fewer nodes (e.g., North Dakota, South Dakota, and the like) may be combined into a single sub-network based on geographic location. In this example, nodes in a large city (e.g., New York, Chicago, Los Angeles, and the like) also may be combined to form a single sub-network. It will be appreciated that decomposition of a P2P network based on the geographic locations of the nodes of the P2P network at a particular granularity may be performed based on any other suitable factors.

The decomposition of a P2P network based on the geographic locations of the nodes of the P2P network may be performed such that nodes may join multiple sub-networks based on their geographic locations. For example, consider a P2P network that covers the continental United States where many of the sub-networks are formed for individual states and groups of states and where additional regional sub-networks are formed for populous regions (e.g., sub-networks for New York, Chicago, Los Angeles, and other cities). In this example, a node in New Jersey, for example, may join both the sub-network for New Jersey and the sub-network for New York City.

As indicated hereinabove, decomposition of a P2P network based on the geographic locations of the nodes (where the nodes that are geographically close to each other are grouped into sub-networks) provides many advantages, including improvements in network resource usage, improvements in performance, and the like In this case, the heartbeat messages exchanged between nodes remain within the respective sub-networks). Similarly, in this case, when searching for a file at a geographically remote sub-network, only the initial search message must traverse the relatively long geographical distance from the local sub-network to the remote sub-network, and all subsequent search messages will remain within the remote sub-network. Similarly, in this case, when a node joins or leaves a sub-network, the file transfers that result from the join or leave are between nodes within the sub-network. For each of these functions, the associated messages/files traverse relatively shorter geographical distances than would otherwise be possible before decomposition of the network.

The decomposition of a P2P network based on the communities of interest of the users of the nodes of the P2P network may be performed based on any suitable communities of interest (which also may be at any suitable granularity). For example, a P2P network of a university may be decomposed into sub-networks based on academic department / area interest (e.g., one sub-network for the mathematics department, one sub-network for the physics department, and so forth). For example, a P2P network of music may be decomposed into sub-networks based on the type of music (e.g., one sub-network for blues music, one sub-network for country music, and so forth).

As described hereinabove, P2P networks also may be decomposed using combinations of such decomposition criteria. For example, a national P2P network for exchanging academic information may be decomposed into sub-networks for each of the universities within the country, and one or more of the university sub-networks may be further decomposed into associated sub-networks for each of the academic departments at that university. For example, a state P2P network for exchanging library books may be decomposed into sub-networks for each of the counties within the state, and one or more of the county sub-networks may be further decomposed into associated sub-networks for each of the libraries located within that county. From these examples, it will be appreciated that a P2P network may be decomposed into any number of sub-networks at any number of hierarchical levels based on any combination of decomposition criteria.

Although primarily depicted and described herein with respect to decomposition of a P2P network to form a decomposed P2P network having two hierarchical levels, it will be appreciated that one or more of the sub-networks may be further decomposed into associated sub-networks, and so forth, such that a P2P network may be decomposed into any suitable arrangement having any suitable number of hierarchical levels.

The decomposition of a P2P network to form a decomposed P2P network may be better understood by considering decomposition of Chord network 100 of FIG. 1 to form decomposed Chord network 200 of FIG. 2.

As depicted in FIG. 2, control network 202 of FIG. 2 is identical to Chord network 100 of FIG. 1 in that all of the active nodes of Chord network 100 of FIG. 1 also belong to the control network 202 of FIG. 2.

As depicted in FIG. 2, decomposed Chord network 200 includes three sub-networks. The sub-networks 204 have sub-network indices associated therewith, respectively, as specified in the network map for decomposed Chord network 200. In FIG. 2, for purposes of clarity, assume that the network index is a two-bit field and, further, that the network map for decomposed Chord network 200 is configured as indicated in Table 2, which follows:

**Table 2**

| sub-network | sub-network index |
|---|---|
| 204₁ | 00 |
| 204₂ | 01 |
| 204₃ | 10,11 |

As depicted in FIG. 1, thirty-six of the sixty-four nodes of Chord network 100 are active (namely, nodes 0, 2 - 3, 5 - 7, 9, 12 - 13, 16 - 24, 26, 29 - 30, 32, 34 - 35, 37, 41, 43, 45, 49, 51, 53 - 54, 56 - 58, and 62), and the remaining nodes are inactive.

As depicted in FIG. 2, each of the thirty-six active nodes of Chord network 100 are members of control network 202 of decomposed Chord network 200, and subsets of the thirty-six active nodes of Chord network 100 are members of sub-networks 204₁, 204₂, and 204₃, respectively.

In decomposed Chord network 200, nodes 0, 6, 7, 13, 16, 20, 21, 24, 29, 35, 43, 53, 56, and 58 are active nodes in sub-network 204₁, nodes 3, 7, 12, 16, 19, 21, 22, 23, 32, 37, 45, 51, 53, 57, and 62 are active nodes in sub-network 204₂, and nodes 2, 5, 9, 12, 16, 17, 18, 19, 26, 29, 30, 34, 41, 45, 49, 54, 56, and 58 are active nodes in sub-network 204₃.

In decomposed Chord network 200, ten of the active nodes of control network 202 are members of two of the sub-networks 204: nodes 7, 21, and 53 are members of both sub-networks 204₁ and 204₂; nodes 12, 19, and 45 are members of both sub-networks 204₂ and 204₃; and nodes 29, 30, 56, and 58 are members of both sub-networks 204₁ and 204₃.

In decomposed Chord network 200, one of the active nodes of control network 202 is a member of each of the three sub-networks 204, namely, node 16.

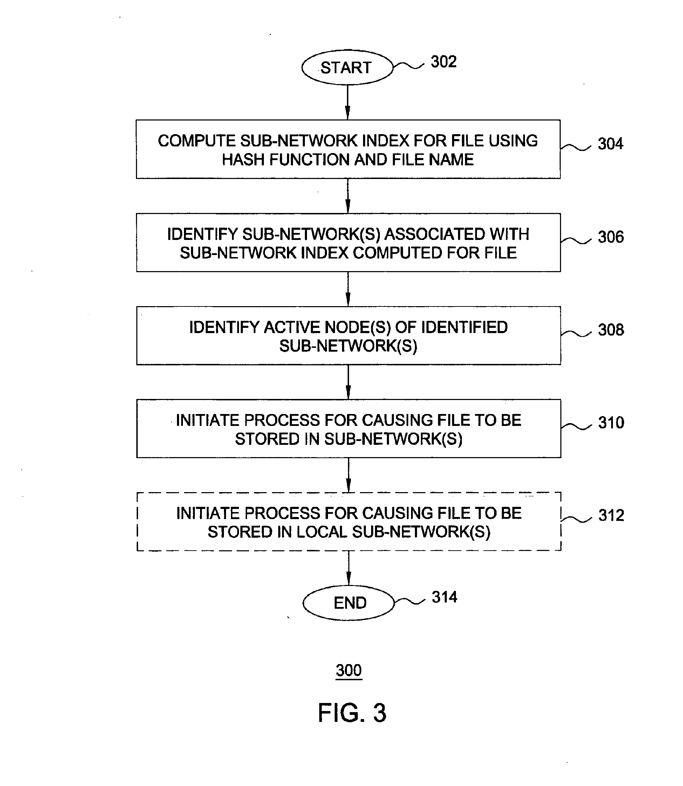

The operation of a decomposed P2P network may be better understood with respect to FIG. 3 - FIG. 9, which describe various embodiments of methods for performing functions within a decomposed P2P network (e.g., storing files, searching for files, and the like).

FIG. 3 depicts one embodiment of a method for use by a node in causing a file to be stored within a decomposed P2P network.

At step 302, method 300 begins.

At step 304, a sub-network index of the file is computed. The sub-network index of the file is computed by hashing an identifier of the file (e.g., file name or other suitable file identifier) using a hash function. The hash function may be a sub-network index hash function such that the sub-network index of the file is determined as g(filename). The hash function may be a full hash such that the sub-network index of the file is represented by the K most significant bits of the result of h(filename), and where the file ID of the file is represented by the M least significant bits of the result of h(filename).

At step 306, a sub-network(s) associated with the sub-network index of the file is identified. The sub-network(s) associated with the sub-network index may be identified using the network map of the decomposed P2P network. The identified sub-network(s) is the sub-network(s) in which the file should be stored.

At step 308, an active node(s) associated with the identified sub-network(s) is identified. In one embodiment, for each of the one or more sub-networks associated with the sub-network index, one or more active nodes of the sub-network are identified.

An active node of a sub-network may be identified in any suitable manner.

In one embodiment, an active node of a sub-network may be determined using information stored locally in the node executing method 300.

In one embodiment, an active node of a sub-network may be identified by searching for an active node of the sub-network using the control network of the decomposed P2P network. In one such embodiment, the search for an active node of a sub-network may be performed using a service location capability, such as the service location capability depicted and described in U.S. Patent Application Serial No. XX/XXX,XXX [Attorney Docket No. Chu 19-43 (ALU/130209)], entitled "METHOD AND APPARATUS FOR LOCATING SERVICES WITHIN PEER-TO-PEER NETWORKS," which is hereby incorporated by reference herein in its entirety.

At step 310, a process is initiated for causing the file to be stored in each of the identified sub-networks. This process may be any process that is suitable for causing the file to be stored at each of the identified sub-networks. This process may be a normal file storage process as specified by the P2P technology in use in the decomposed P2P network.

At step 312, an optional step, a process is initiated for causing the file to be stored in a local sub-network of the node (or multiple local sub-networks of the node if the node belongs to multiple sub-networks of the decomposed P2P network).

In one embodiment, the node may store the file in a local sub-network where it is necessary or desirable to do so. For example, the node may want to store the file in a local sub-network where the file includes information that pertains to the local sub-network, where the file is a popular file that is often retrieved by members of the local sub-network (e.g., if the regions are organized so that nodes of a local sub-network are geographically close to each other, it is more efficient to retrieve a file from the local sub-network than from a remote sub-network), and the like, as well as various combinations thereof.

In one embodiment, the node may only store the file in a local sub-network where the node is privileged to do so. The determination as to whether the node is privileged to store the file in a local sub-network may be performed in any suitable manner. In one such embodiment, for example, a public key system may be used to authenticate a user when the node joins the P2P network (i.e., in public key system, each user is assigned a digital certificate which can be used to identify the user, and the certificate can be used to indicate whether the user has the privilege to store files at the local sub-networks).

At step 314, method 300 ends.

Although omitted from method 300 of FIG. 3 for purposes of clarity in describing the method for causing a file to be stored in a decomposed P2P network, in one embodiment, in order to facilitate management of a file within the decomposed P2P network, file management information may be provided as a logical companion to a file for use in facilitating management of the file within the decomposed P2P network. The file management information may be included within the file and/or provided as a separate file/message that is associated with the file. The file management information for a file may include any information suitable for use in facilitating management of the file within the decomposed P2P network. In one embodiment, for example, file management information for a file includes one or more of: (1) the identity of the storing node that initiates storage of the file in the decomposed P2P network and/or the identities of one or more other nodes (associated with one or more sub-networks) that are willing to manage the presence of the file in the decomposed P2P network (which may be referred to collectively as the seeding nodes for the file); (2) a time at which the file is first stored in the sub-network; (3) a time-stamp for enabling expiration of the file within individual sub-networks and/or within the decomposed network as a whole (e.g., at the expiration of the time-stamp, the storing node will consult the seeding node(s) to ascertain whether the sub-network(s) associated with the seeding node(s) should continue to store the file; if the response from a seeding node is negative, the file is deleted from the sub-network of the seeding node, and if the response from a seeding node is positive, the time stamp can be updated); (4) a counter for enabling intelligent removal of the file from individual sub-networks and/or from the decomposed P2P network as a whole (e.g., where the counter keeps track of the number of times the file has been retrieved over the last n days, where, if the frequency of retrieval is below a certain threshold, the storing node will consult the seeding node(s) in order to ascertain whether the local sub-network(s) of the seeding node(s) should continue to store the file); and the like, as well as various combinations thereof. It will be appreciated that the file management information may include any other information suitable for use in performing file management functions within individual sub-networks and/or within the decomposed P2P network as a whole.

Although primarily depicted and described herein as being performed serially, at least a portion of the steps of method 300 may be performed contemporaneously, or in a different order than depicted and described with respect to FIG. 3. Although depicted and described herein with respect to a specific implementation of process logic for storing a file in a decomposed P2P network, it will be appreciated that process logic for storing a file in a decomposed P2P network may be implemented in various other ways while still supporting the P2P network decomposition capability.

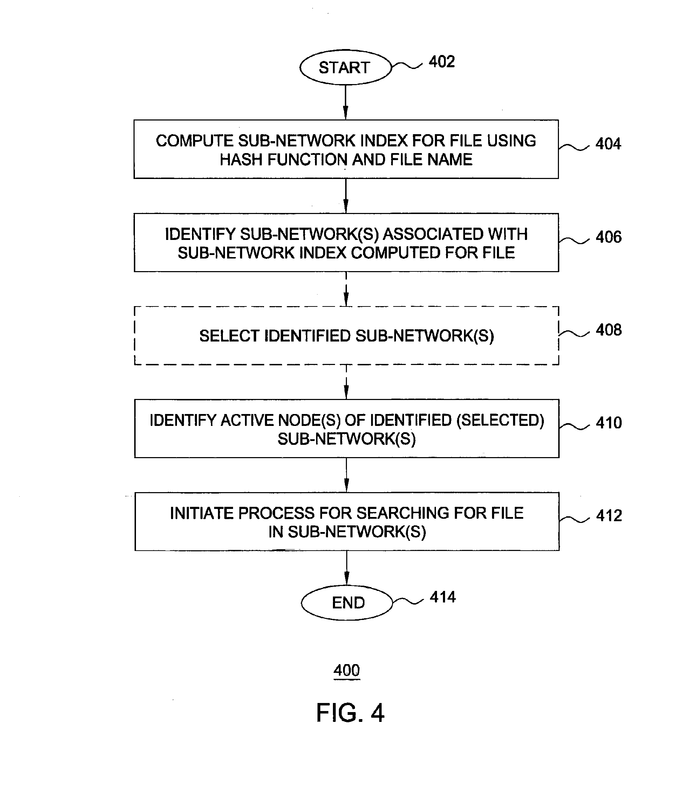

FIG. 4 depicts one embodiment of a method for use by a node in locating a file stored within a decomposed P2P network.

At step 402, method 400 begins.

At step 404, a sub-network index of the file is computed. The sub-network index of the file is computed by hashing an identifier of the file (e.g., file name or other suitable file identifier) using a hash function. The hash function may be a sub-network index hash function such that the sub-network index of the file is determined as g(filename). The hash function may be a full hash such that the sub-network index of the file is represented by the K most significant bits of the result of h(filename), and where the file ID of the file is represented by the M least significant bits of the result of h(filename).

At step 406, a sub-network(s) associated with the sub-network index of the file is identified. The sub-network(s) associated with the sub-network index may be identified using the network map of the decomposed P2P network. The identified sub-network(s) is the sub-network(s) in which the file is being stored. If the file is being stored in multiple sub-networks, one or more of those sub-networks may be identified using the sub-network index (e.g., depending on whether the node will search for the file in one, some, or all of the sub-networks storing the file).

At step 408, an optional step, when multiple sub-networks are identified using the sub-network index (i.e., the file is stored in multiple sub-networks), one or more of the identified sub-networks is selected as the sub-network(s) to be searched for the file.

At step 410, an active node(s) associated with the identified (and, optionally, selected) sub-network(s) is identified. In one embodiment, for each of the one or more sub-networks identified using the sub-network index (and, optionally, selected from among the identified sub-networks), one or more active nodes of the sub-network are identified.

An active node of a sub-network may be identified in any suitable manner.

In one embodiment, an active node of a sub-network may be determined using information stored locally in the node executing method 400.

In one embodiment, an active node of a sub-network may be identified by searching for an active node of the sub-network using the control network of the decomposed P2P network. In one such embodiment, the search for an active node of a sub-network may be performed using a service location capability, such as the service location capability depicted and described in U.S. Patent Application Serial No. XX/XXX,XXX [Attorney Docket No. Chu 19-43 (ALU/130209)], entitled "METHOD AND APPARATUS FOR LOCATING SERVICES WITHIN PEER-TO-PEER NETWORKS," which is hereby incorporated by reference herein in its entirety.

At step 412, a process is initiated for searching for the file within each sub-network(s) for which an active node(s) is identified. This process may be any process that is suitable for searching for the file in a P2P network of which the node is not a member. The node may contact the active node(s) in order to request that the active node(s) searches for the file within its sub-network using a normal file search process as specified by the P2P technology in use in the decomposed P2P network. The search for the file within a sub-network may be performed using a file ID of the file as determined by hashing the file identifier.

At step 414, method 400 ends.

Although omitted for purposes of clarity, in one embodiment, in addition to search for the file within the identified sub-networks, the node also may search for the file in its local sub-network(s).

Although depicted and described as ending (for purposes of clarity), where execution of method 400 results in initiation of one or more file search request messages by the node, the node may continue to perform processing in support of the file search requests initiated by the node including, upon locating a node storing the file, initiating a request for the file to the node storing the file and receiving the file from the node storing the file.

Although primarily depicted and described herein as being performed serially, at least a portion of the steps of method 400 may be performed contemporaneously, or in a different order than depicted and described with respect to FIG. 4. Although depicted and described with respect to a specific implementation of process logic for searching for a file in a decomposed P2P network, it will be appreciated that process logic for searching for a file in a decomposed P2P network may be implemented in various other ways while still supporting the P2P network decomposition capability.

Although primarily depicted and described as separate processes, it will be appreciated that the process for use by a node in causing a file to be stored within a decomposed P2P network (as depicted in FIG. 3) and the process for use by a node in locating a file stored within a decomposed P2P network (as depicted in FIG. 4), include similar steps such that these two processes may be implemented using a single method in which the following steps oare performed: computing a sub-network index of the file, identifying one (or more) of the sub-networks associated with the sub-network index of the file, identifying an active node (or nodes) of the identified one of the sub-networks, and initiating a process for using the active node to manage the file in the decomposed P2P network, where the process for using the active node to manage file may be a process for causing the file to be stored in the network or a process for locating the file within the network.

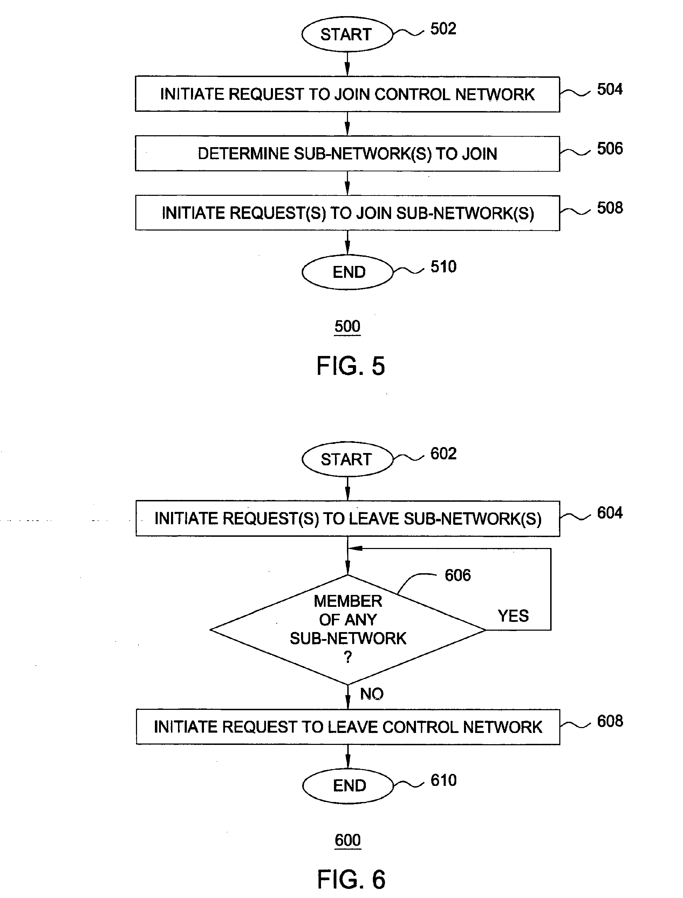

In one embodiment, in order to join a sub-network of a decomposed P2P network, a node must first join the control network of the decomposed P2P network. A method according to one embodiment for enabling a node to join a sub-network of a decomposed P2P network is depicted and described with respect to FIG. 5.

FIG. 5 depicts one embodiment of a method for use by a node in joining a sub-network of a decomposed P2P network.

At step 502, method 500 begins.

At step 504, the node initiates a request to join the control network of the decomposed P2P network. The request to join the control network may be initiated in any suitable manner, including using the standard process for joining a P2P network.

At step 506, the node determines one or more sub-networks to be joined.

The node may determine the sub-network(s) to be joined in any suitable manner. In one embodiment, the sub-network(s) that the node can or should join is available on the node (e.g., administratively configured on the node). In one embodiment, the sub-network(s) that the node can or should join is obtained by the node by querying another device for the information (e.g., the control network of the decomposed P2P network, a web server, and the like). The node may determine the sub-network(s) to be joined in any other suitable manner.

In one embodiment, the sub-network(s) that the node can or should join is determined from the network map of the decomposed P2P network. In this embodiment, the network map may be available on the node (e.g., where the network map is administratively configured on the node) or obtained by the node in any suitable manner. In one embodiment, for example, when the node joins the control network, the node will exchange messages with its predecessor and successor in the control network, and the network map could be included as part of the information that is exchanged. In one embodiment, for example, the node may search for an active node(s) of the control network that has the network map available (e.g., using a service location capability, such as the service location capability depicted and described in U.S. Patent Application Serial No. XX/XXX,XXX [Attorney Docket No. Chu 19-43 (ALU/130209)], entitled "METHOD AND APPARATUS FOR LOCATING SERVICES WITHIN PEER-TO-PEER NETWORKS," which is hereby incorporated by reference herein in its entirety). In one embodiment, for example, the node may obtain the network map using web technology (e.g., retrieving the network map from a web server and the like). The node may obtain the network map in any other suitable manner.

In one embodiment, in which the node determines the sub-network(s) that can or should be joined from the network map, the network map may be encoded with information adapted for use by the node in determining the sub-network(s) that can or should be joined. In this embodiment, the network map may be encoded with any suitable information and in any suitable manner.

In one embodiment, the information adapted for use by the node in determining a sub-network(s) that can or should be joined may be dependent on the type of decomposition criteria on which the decomposition of the P2P network is based (e.g., geographic location, community of interest, and the like, as well as various combinations thereof).

A description of examples of different types of such information, i.e., information adapted for use by the node in determining a sub-network(s) that can or should be joined, follows.

In one embodiment, for example, the name of each sub-network can be encoded with geographic information such that the node can parse the sub-network name for automatically selecting the appropriate sub-network(s) and/or so that sub-network names can be displayed at the node for enabling the user to select the appropriate sub-network(s). For example, the sub-networks may be named as new-york-regional-network, new-jersey-regional-network, and so forth).

In one embodiment, for example, each of the sub-networks may have geographic coverage area information associated therewith, such that the node will join a sub-network(s) if the geographic location of the node falls within the geographic coverage area of the sub-network. The geographic coverage area information may be specific using any suitable means (e.g., longitude and latitude the four corners of a rectangle or any other suitable means). The geographic coverage areas of different sub-networks may be set such that none of the areas overlap, some of the areas overlap and others do not, all of the areas have some level of overlap, and the like. If the geographic location of a node falls within the overlapping geographic coverage areas of multiple sub-networks, the node may join one, some, or all of the associated sub-networks. The geographic location of the node may be determined in any suitable manner (e.g., user input, network measurement information, GPS, and the like).

In one embodiment, for example, each of the sub-networks may have a geographic center associated therewith, such that the node will join a sub-network(s) based on a distance(s) from the geographic location of the node to the geographic center(s) of the sub-network(s). The geographic center may be specified in any suitable manner (e.g., using latitude and longitude). The geographic location of the node may be determined in any suitable manner (e.g., user input, network measurement information, GPS, and the like). For example, the node may determine the distances from the geographic location of the node to the geographic centers of each of the sub-networks, and then select one or more of the closest sub-networks based on the determined distances. For example, the node may determine distances from the geographic location of the node to the geographic centers of the sub-networks, in series, until finding a sub-network(s) for which the associated distance satisfies a threshold.

In one embodiment, for example, each of the sub-networks may have a number of IP address prefixes associated therewith, such that the node will join a sub-network(s) if the IP address of the node is included within any of the IP address prefixes associated with the sub-network. For example, a mapping of sub-network 1 to IPv4 prefixes 132.222.x.y, a mapping of sub-network 2 to IPv4 prefixes 133.222.x.y, and so forth).

In one embodiment, for example, the name of each sub-network can be encoded with content type information such that the node can parse the sub-network name for automatically selecting the appropriate sub-network(s) and/or so that sub-network names can be displayed at the node for enabling the user to select the appropriate sub-network(s). For example, the sub-networks may be named as rutgers-physics-network, rutgers-biology-network, and so forth).

Although specific examples of different types of information adapted for use by the node in determining a sub-network(s) that can or should be joined are provided above, it will be appreciated that any other suitable information may be used.

Although the examples provided above, for types of information adapted for use by the node in determining the sub-network(s) that can or should be joined, primarily describe use of such information in a mutually exclusive way, it will be appreciated that any suitable combination of such information also may be used for enabling the node to determine the sub-network(s) that can or should be joined.

At step 508, the node initiates a request(s) to join the sub-network(s) to be joined. The request to join a sub-network may be initiated in any suitable manner, including using the standard process for joining a P2P network.

At step 510, method 500 ends.

Although omitted for purposes of clarity, it will be appreciated that the node also may perform a step of determining whether the node has joined the control network. In one embodiment, for example, the node may ensure that it has successfully joined the control network before proceeding from step 504 to step 506 (e.g., where the node determines which sub-network(s) to join using information obtained from the control network). In one embodiment, for example, the node may ensure that it has successfully joined the control network before proceeding from step 506 to step 508 (e.g., where the node determines which sub-network(s) to join using information obtained from a source other than the control network). In such embodiments, the node ensures that it has successfully joined the control network before initiating a request(s) to join the sub-network(s).

Although primarily depicted and described with respect to a specific implementation of process logic for joining a decomposed P2P network, it will be appreciated that process logic for joining a decomposed P2P network may be implemented in various other ways while still supporting the P2P network decomposition capability.

Although written from the perspective of the node that is joining the decomposed P2P network, it will be appreciated that associated processing may be performed by one or more nodes of the control network for enabling the node to join the control network and, similarly, by one or more nodes of the sub-network(s) joined by the node for enabling the node to join the sub-network(s).

FIG. 6 depicts one embodiment of a method for use by a node in leaving a decomposed P2P network.

At step 602, method 600 begins.

At step 604, the node initiates a request(s) to leave each sub-network(s) of the decomposed P2P network (i.e., each of the sub-networks of which the node is a currently member). The request to leave a sub-network may be initiated in any suitable manner, including using the standard process for leaving a P2P network.

At step 606, a determination is made as to whether the node is a member of any of the sub-networks of the decomposed P2P network. If the node is still a member of any of the sub-networks of the decomposed P2P network, method 600 returns to step 606. If the node is no longer a member of any of the sub-networks of the decomposed P2P network, method 600 proceeds to step 608.

At step 608, the node initiates a request to leave the control network of the decomposed P2P network. The request to leave the control network may be initiated in any suitable manner, including using the standard process for leaving a P2P network.

At step 610, method 600 ends.

Although primarily depicted and described with respect to a specific implementation of process logic for leaving a decomposed P2P network, it will be appreciated that process logic for leaving a decomposed P2P network may be implemented in various other ways while still supporting the P2P network decomposition capability.

As described herein, the network map of a decomposed P2P network facilitates joining of the decomposed P2P network, storage of files within the decomposed P2P network, searching of files within the decomposed P2P network, and like functions associated with the decomposed P2P network. In some implementations, the network map may be relatively static, while in other implementations, the network map may be more dynamic; however, regardless of the frequency with which the network map is changed, there may be times when at least a portion of the information of the network map may be modified.

In such embodiments in which the network map may be changed, the network map also may include information adapted for use in managing modifications to the network map. The information adapted for use in managing modifications to the network map may include any information suitable for this purpose, such as one or more of the following: a name of the network map, a version number of the network map, a creation timestamp indicating the time at which the current version of the network map was created, an administrator identity of the network administrator(s) of the network map, a digital signature of the network administrator(s) of the network map, a message digest for use in detecting any unauthorized modifications of the network map, and the like, as well as various combinations thereof.

In general, when the network map is changed, the transition should take place over a reasonable time span so as to minimize disruptions which may be caused by changing the network map. In such embodiments in which the network map may be changed, in order to minimize disruptions to the decomposed P2P network which may be caused by changing the network map, the network map also may include a time interval value, referred to herein as the transition time interval. The transition time interval may be used to modify the network map dynamically in a manner for minimizing disruptions to the decomposed P2P network.

In one embodiment, a transition time interval of the network map may be used by a node to minimize disruptions to the decomposed P2P network as follows. The node receives an update message. The node compares the version number of the network map in the update message to the version number of the network map that is stored locally on the node (e.g., from the last update message received at the node) in order to determine whether the network map has changed. When the node detects that the network map has changed, the node compares the current time with the creation timestamp indicating the time at which the current (changed) version of the network map was created. If the difference between the current time and the creation time is greater than the transition time interval, this indicates that the network has already stabilized from the change to the network map and, thus, that the node should executed any required changes as soon as possible. If the difference between the current time and the creation time is less than the transition time interval, this indicates that the network is in a transition period (or likely to be in a transition period) due to the change to the network map and, thus, that the node should wait before executing any required changes. The node may wait any suitable length of time before executing any required changes (e.g., a predetermined length of time, a random length of time, and the like). In this manner, disruptions to the decomposed P2P network due to changes to the network map can be reduced and even minimized.

The transition time interval may be set in any suitable manner, which may depend on the number of nodes in the network and the number or percentage of those nodes that will be or are expected to be affected by changes to the network map.

As indicated above, one of the challenges in changing the network map is to minimize, or at least reduce, the amount of disruption caused in the decomposed P2P network as a result of changing the network map. In this context, disruption of the decomposed P2P network may be considered to be loss of files stored in the decomposed P2P network, transfers of files between nodes of the P2P network (e.g., within sub-networks and/or between sub-networks), and like activities.

In general, any information of the network map may be changed; however, the desirability of changing information of the network map is different for different types of information of the network map.

For example, the two hash functions (i.e., key space hash function f(x) and sub-network index hash function g(x)) are important for the operation of the decomposed P2P network and, thus, most likely will not be changed (although it will be appreciated that there may be cases where changes may be required or desired).

For example, the decomposition criteria, which specify the manner in which the P2P network is decomposed to form the decomposed P2P network, are more likely to be changed. As described herein, the decomposition criteria may include one or more of geographic descriptors, community of interest descriptors, and the like, as well as various combinations thereof. A change to the decomposition descriptors may necessitate changes in sub-network membership by nodes of the decomposed P2P network (e.g., some nodes disconnecting from sub-networks and/or some nodes joining sub-networks). If the change is executed in a controlled manner, disruption of the decomposed P2P network may be reduced or even eliminated. It is clear in this case that if a large number of nodes leave and/or join sub-networks in a short period of time there is a high likelihood of disruption of the decomposed P2P network. Thus, changing of the network map should be executed in a manner which attempts to avoid having all of the affected nodes leave and/or join sub-networks at the same time.

With respect to changing the network map, although examples have been provided for a subset of the types of information which may be included in the network map, it is clear that changes to other types of information which may be included in the network map also may result in disruption of the decomposed P2P network.

In order to reduce or eliminate disruption of the decomposed P2P network, changes should be executed incrementally in stages.

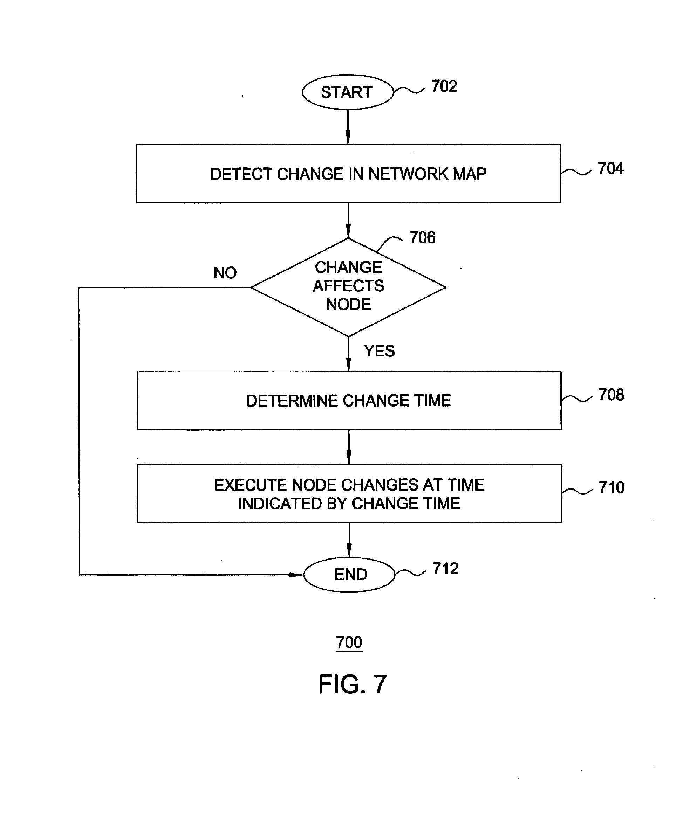

A method according to one embodiment for controlling the manner in which a node executes changes based on changing of the network map is depicted and described with respect to FIG. 7.

FIG. 7 depicts one embodiment of a method for use by a node in executing changes based on a change in the network map of a decomposed P2P network.

At step 702, method 700 begins.

At step 704, the node detects a change in the network map. The node may detect that the network map has changed in any suitable manner (e.g., version number, parsing information of network map, and the like, as well as various combinations thereof). The node may check for changes in the network map at any suitable time (e.g., each time the node communicates via the control network, by periodically contacting the control network, and the like, as well as various combinations thereof).

At step 706, the node determines whether the detected change in the network map affects the node.

This determination may be performed in any suitable manner, which may depend on the type of information of the network map that has changed.

For example, where the decomposition criteria include geographic descriptors specified as rectangular geographic areas associated with each of the sub-networks, the determination as to whether the detected change in the network map affects the node may include determining the geographic location of the node and comparing the geographic location of the node to the rectangular geographic areas associated with each of the sub-networks in order to determine if the sub-network(s) of which the node is a member needs to be changed.

For example, where the decomposition criteria include community of interest descriptors specified as sub-network names associated with each of the sub-networks, the determination as to whether the detected change in the network map affects the node may include scanning each of the sub-network names in order to determine if the sub-network(s) of which the node is a member needs to be changed.

In this manner, in the case where the node is affected, the determination as to whether the detected change in the network map affects the node enables the node to determine the changes to be executed by the node.

If the node is not affected by the change, method 700 proceeds to step 712, at which point method 700 ends.

If the node is affected by the change, method 700 proceeds to step 708.

At step 708, a change time is determined. The change time is indicative of the amount of time that the node will wait before executing changes based on changing of the change in the network map. The change time may be specified in any suitable manner (e.g., as a length of time to wait before executing the change, as a time in the future at which the change should be executed, and the like). The change time may be determined in any suitable manner (e.g., based on a predetermined length of time wait, by randomly generating a time stamp based on the current time, and the like).

At step 710, the node executes the changes at a time indicated by the change time.

At step 712, method 700 ends.

Although primarily depicted and described with respect to a specific implementation of process logic for enabling a node to execute changes based on changes to the network map, it will be appreciated that process logic for enabling a node to execute changes based on changes to the network map may be implemented in various other ways while still supporting the P2P network decomposition capability.

As changes to the decomposed P2P network based on changes to the network map are performed over a time interval, it will be appreciated that method 700 of FIG. 7 is only needed by nodes that are members of the decomposed P2P network at the time at which the network map changes, because any nodes that join the decomposed P2P network after the time at which the network map changes will join the decomposed P2P network as indicated by the network map.

From the foregoing, it may be seen that by changing the network map incrementally, in stages, and spreading nodal changes over a reasonable time interval, disruption of the decomposed P2P network resulting from changes to the network map can be reduced and possibly even eliminated.

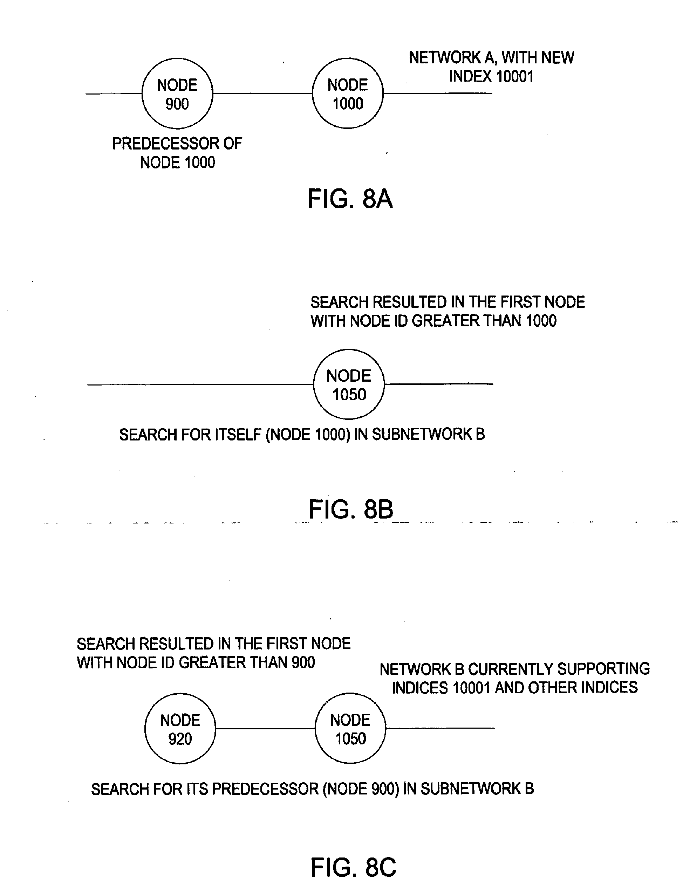

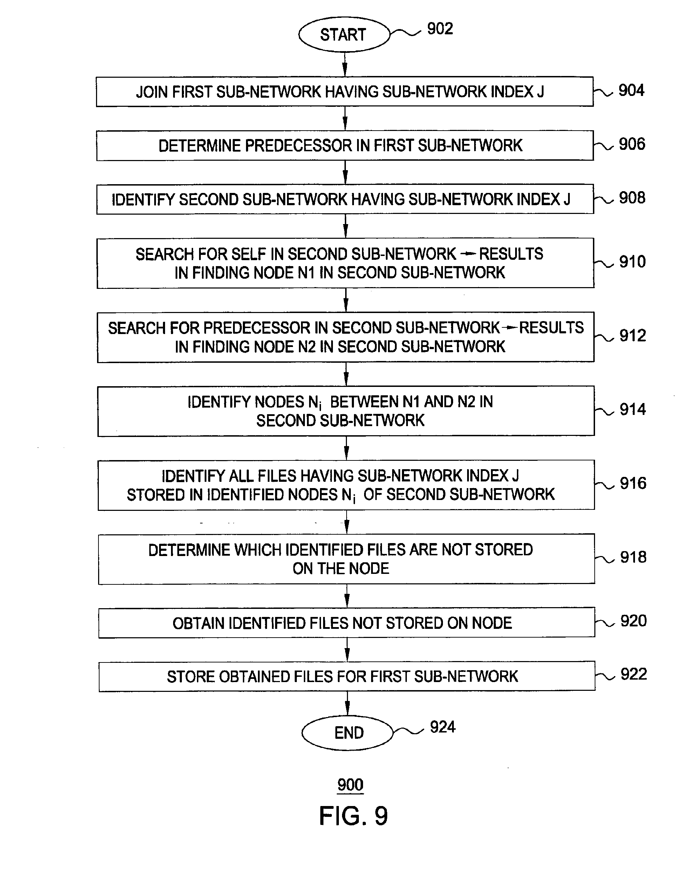

As described herein, changes in the network map may include changes to any type of information in the network map, including the sub-network index mapping. With respect to changing the sub-network index mapping, there are basically two types of incremental changes: (a) adding a sub-network index to a sub-network and (b) deleting a sub-network index from a sub-network. The case in which a sub-network index is moved from a first sub-network to a second sub-network may be handled as an "add" operation followed by a "delete" operation, however there is one additional concern associated with this case: namely, when a sub-network index is added to the second sub-network, the first sub-network needs to transfer files of that sub-network index to the second sub-network. An example showing a process by which files may be transferred from a first sub-network to a second sub-network is depicted and described with respect to FIGs. 8A - 8E, and a more general process by which files may be transferred from a first sub-network to a second sub-network is depicted and described with respect to FIG. 9.

FIGs. 8A - 8E depict an example showing a process by which files may be transferred from a first sub-network to a second sub-network.

In this example, let the P2P network be a Chord network, and assume that an existing sub-network B is currently assigned a sub-network index of 10001 and that the network administrator would like to create a new sub-network A having sub-network index 10001 assigned thereto. The network administrator would update the network map to reflect the new sub-network A and the assignment of sub-network index 10001 to new sub-network A. The network administrator also would update the network map in a way to indicate to nodes of the Chord network that the network map has been updated (e.g., changing the version number of the network map). The network administrator would broadcast the updated network map over the Chord control network. The updated network map may be broadcast over the Chord control network in any suitable manner. For example, if the Chord control network is implemented as a Chord control network supporting a service location capability which also may be used to provide a broadcast capability, such as the service location capability depicted and described in U.S. Patent Application Serial No. XX/XXX,XXX [Attorney Docket No. Chu 19-43 (ALU/130209)], entitled "METHOD AND APPARATUS FOR LOCATING SERVICES WITHIN PEER-TO-PEER NETWORKS," which is hereby incorporated by reference herein in its entirety, the updated network map may be broadcast using the broadcast capability. In addition to learning of the updated network map via broadcast of the updated network map, nodes of the Chord control network also may learn of the updated network map through heartbeat messages exchanged with their predecessor(s) and successor(s) over the Chord control network (e.g., where some of the broadcast messages fail). In this manner, all nodes of the Chord control network are informed of the updated network map.

In this example, as sub-network index A is newly assigned to new sub-network A, new sub-network A may not have all of the files associated with sub-network index 10001 stored in new sub-network A. As a result, when a node first joins new sub-network A, that node may want to acquire the files associated with sub-network index 10001 from another sub-network that supports sub-network index 10001 (i.e., sub-network B in this example). In this example, assume that node 1000 joins new sub-network A using the normal join procedure for a Chord network. A description of a procedure by which node 1000 may acquire the files associated with sub-network index 10001 for storage in new sub-network A follows.

As depicted in FIG. 8A, node 1000 joins new sub-network A, and node 900 is the predecessor of node 1000 and node 1100 is the successor of node A within new sub-network A. Upon joining new sub-network A, successor node 1100 transfers all files having a file ID between 901 and 1000 to node 1000 (however, this list may not be complete, as sub-network A is newly formed). As this list of files may not be complete, node 1000 may want to ascertain that it indeed has all of the necessary files for which it is responsible in new sub-network A.

As depicted in FIG. 8B, node 1000 identifies sub-network B (i.e., identifies another sub-network that supports sub-network index 10001, which, in this example, sub-network B) and, if node 1000 is not a member of sub-network B, node 1000 searches for itself in sub-network B. As further depicted in FIG. 8B, as a result of searching for itself in sub-network B, node 1000 identifies a node in sub-network B having a node ID greater than and closest to node 1000 (illustratively, in this example, node 1050).

As depicted in FIG. 8C, node 1000 then searches for node 900 (i.e., its own predecessor in new sub-network A, which, in this example, is node 900) in sub-network B. As further depicted in FIG. 8C, as a result of searching for its predecessor in sub-network B, node 1000 identifies a node in sub-network B having a node ID greater than and closest to node 900 (illustratively, in this example, node 920).

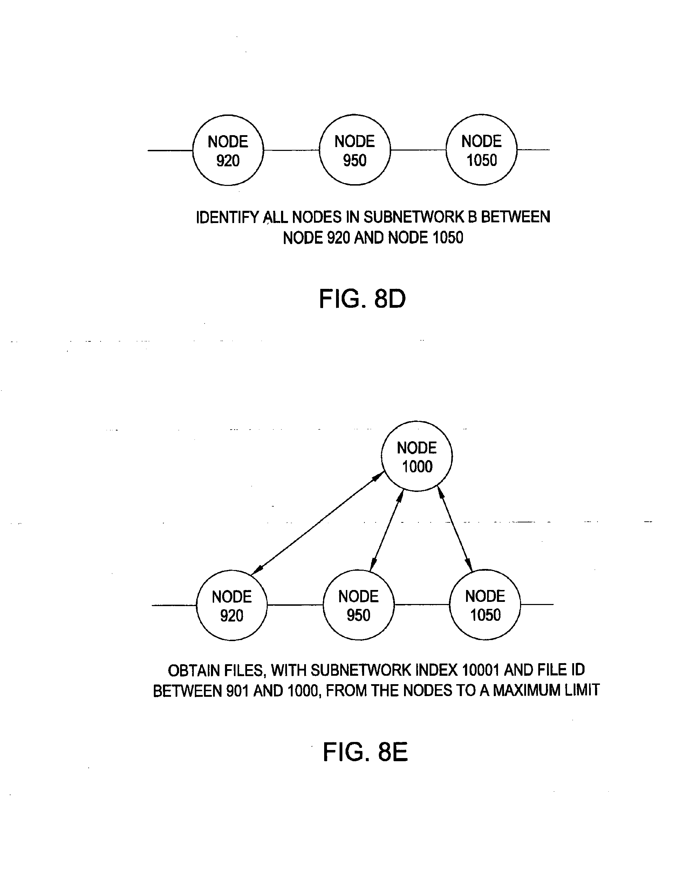

As depicted in FIG. 8D, node 1000 identifies all nodes in sub-network B that are between node 920 and node 1050. The node 1000 can determine these nodes by querying each of the nodes (because all nodes know the identities of their predecessor(s) and successor(s), respectively). As depicted in FIG. 8D, for purposes of clarity, assume that only one node between nodes 920 and 1050 is active in sub-network B, namely, node 950.

As depicted in FIG. 8E, node 1000 obtains, from identified nodes of sub-network B, any files, associated with sub-network index 10001 and having a file ID between 901 and 1000, which node 1000 is not already storing. The node 1000 queries each of the identified nodes 920, 950, and 1050 for lists of files, associated with sub-network index 10001 and having a file ID between 901 and 1000, stored by those nodes. The node 1000 then compares the file-lists to files that node 1000 is already storing. The node 1000 then retrieves any files, associated with sub-network index 10001 and having a file ID between 901 and 1000, which node 1000 is not already storing.

FIG. 9 depicts one embodiment of a method for enabling a node of a first sub-network to acquire files from a second sub-network when initializing a Chord sub-network in a decomposed Chord network.

At step 902, method 900 begins.

At step 904, the node joins the first sub-network. The node has a node ID of N and the first sub-network has a sub-network index of J.

At step 906, the node determines its predecessor in the first sub-network. The predecessor node has a node ID of P.

At step 908, the node identifies another sub-network having a sub-network index of J (denoted as the second sub-network, from which the files will be obtained).

At step 910, the node searches for itself in the second sub-network (searches the second sub-network for a node having a node ID of N). The result of the search is that node N receives an indication of a node in the sub-network that has a node ID greater than and closest to node ID N. This resulting node is denoted as node N1.

At step 912, the node searches for predecessor P in the second sub-network (searches the second sub-network for a node having a node ID of P). The result of the search is that node N receives an indication of a node in the sub-network that has a node ID greater than and closest to node ID P. This resulting node is denoted as node N2.

At step 914, the node identifies all nodes (Nᵢ) in the second sub-network that are between node N1 and node N2.

At step 916, the node identifies all files having sub-network index J that are stored in the identified nodes Nᵢ. In one embodiment, for example, the node initiates a query for identifying all files having sub-network index J that are stored in the identified nodes Nᵢ, and receives query responses from identified nodes Nᵢ indicating all files having sub-network index J that are stored in the identified nodes Nᵢ.

At step 918, the node determines which, if any, of the identified files that should be stored on the node are not currently stored on the node. The determined files that are not currently stored on the node but which should be stored on the node are determined based on file IDs and node IDs (i.e., those files having file IDs between P and N, including N).

At step 920, the node obtains from the identified nodes Nᵢ any of the identified files that are not currently stored on the node. In one embodiment, for example, the node initiates a request for any of the identified files that are not currently stored on the node, and receives the requested file(s) from the identified nodes Nᵢ.

At step 922, the node stores the obtained file(s) to make them available within the first sub-network.

At step 924, method 900 ends.

Although primarily depicted and described with respect to a specific implementation of process logic for enabling a node joining a first sub-network to acquire files from a second sub-network, it will be appreciated that process logic for enabling a node joining a first sub-network to acquire files from a second sub-network may be implemented in various other ways while still supporting the P2P network decomposition capability.

In the above described embodiment for enabling a node of a new sub-network to acquire files from an existing sub-network in a decomposed Chord network, when the new sub-network is initially formed, there may be only a few active nodes at the new sub-work and, thus, the gap between the joining node and its predecessor may be large. As a result, when the new node searches for files in existing sub-network(s) that have a matching sub-network index, the new node may identify a large number of files. In one embodiment, the new node may only retrieve and store a subset of the identified files (e.g., a limited number of files from the identified nodes in descending order, or any other suitable subset). In this embodiment, as time progresses, more nodes likely will join new sub-network A, at least some of which are likely to be between the new node and its current predecessor, and those new nodes that join the new sub-network can execute similar procedures to obtain any of the files not previously obtained from the existing sub-network(s).

In the above described embodiments, as newly joining nodes acquire files for the new sub-network, the new sub-network acquires a majority of the files, having the associated sub-network index, in a timely and orderly fashion. However, as both the new sub-network and the existing sub-network are dynamic networks at which nodes are joining and leaving the sub-networks, it is possible that not all of the files will be transferred to the new sub-network using the above described embodiments. Thus, in one embodiment, for each file, the seeding node of a file would search for the file on the new sub-network (e.g., at regular intervals, or in any other suitable timeframe) and, if the seeding node determines that the file is missing, the seeding node can transfer the file to the node of the new sub-network that is responsible for storing that file. In one such embodiment, this procedure can be executed or activated once the new sub-network has stabilized, or at least is determined to be relatively stable.

In the above described embodiments for enabling a node of a new sub-network to acquire files from an existing sub-network in a decomposed P2P network, the decomposed P2P network is a decomposed Chord network. It will be appreciated that similar capabilities may be supported in other types of P2P networks by modifying the above-described embodiments in accordance with the principles of other types of P2P networks (e.g., Pastry, Tapestry, and the like).

In one embodiment, for example, the above described embodiments for enabling a node of a new sub-network to acquire files from an existing sub-network in a decomposed Chord network may be modified for enabling a node of a new sub-network to acquire files from an existing sub-network in a decomposed Pastry network. As an example, consider a case of a decomposed Pastry network in which a new node x joins a new sub-network A having a sub-network index of 10001 newly assigned thereto. The new node x will identify a sub-network B having the sub-network index 10001 assigned thereto. The new node x then searches for itself in the identified sub-network B (in this example we assume that new node x is not a member of identified sub-network B, because if new node x is already a member of identified sub-network B then the search is not necessary). The search yields a node y in identified sub-network B. In Pastry, node y maintains a "leaf set" which includes node IDs of nodes that are close to the node ID of node y (in this example, let the nodes of the leaf set of node y be z₁, z₂, ....zₓ). The new node x then identifies files, having sub-network index 10001, that are stored in node y and its leaf set z₁, z₂, ..., zₓ. The new node x then identifies which of the identified files that new node x is not currently storing. The new node x then requests and receives, node y and its leaf set z₁, z₂, ..., zₓ, and those files the identified files that new node x is not currently storing, and stores the received files. Thus, from this example it will be appreciated that method 900 of FIG. 9 may be modified in a manner for enabling a node of a new sub-network to acquire files from an existing sub-network in a decomposed Pastry network.

From the above described embodiments for enabling a node of a new sub-network to acquire files from an existing sub-network in decomposed Chord or Pastry networks, it will be appreciated that the Chord-specific and Pastry-specific methodologies for enabling a node of a new sub-network to acquire files from an existing sub-network may be further generalized to be applicable to any type of P2P network. In one embodiment, a method for enabling a node of a new sub-network to acquire files from an existing sub-network in decomposed P2P network includes: (1) searching, by a new node in a new sub-network supporting a sub-network index, for a closest node in an existing sub-network supporting the sub-network index; (2) obtaining a neighbor set of the identified closest node (e.g., the neighbor set may be predecessor/successor combination, leaf set, or any other suitable set of one or more nodes); (3) identifying, from the node(s) of the neighbor set, files having the sub-network index; and (4) requesting, receiving, and storing at least a portion of the identified files which are not currently stored at the new node.

Although primarily depicted and described herein with respect to embodiments in which the mapping between sub-networks and sub-networks indices is one-to-one or at least relatively close to one to one (e.g., one or more of the sub-networks may have multiple sub-network indices assigned thereto, but still a small fraction of the entire set of sub-network indices; e.g., one or more of the sub-network indices may be assigned to multiple sub-networks, but still a small fraction of the entire set of sub-networks have multiple sub-network indices assigned thereto), in other embodiments the overlap between sub-network / sub-network index assignments may be increased. This increases the probability that file downloads are intra-network rather than inter-network and, thus, improves network resource usage, performance, and reliability; however, the improvements in network resource usage, performance, and reliability are attained at the expense of an associated increase in storage capacity that is required in order to store a larger number of files multiple times in multiple different sub-networks. In one embodiment, the sub-network indices could be assigned in proportion to the size of membership of the sub-networks (e.g., sub-networks with a larger membership could be assigned more sub-network indices, such that storage capacity that is required is divided fairly among the sub-networks). In one embodiment, the extreme case, each of the sub-network indices is assigned to each of the sub-networks, such that each sub-network stores all files of the decomposed P2P network. In this manner, improvements in network resource usage, performance, and reliability may be balanced against the cost of increased storage capacity.

Although primarily depicted and described herein with respect to embodiments in which files are stored within sub-networks of a decomposed P2P network based only on the sub-network indices, in other embodiments files also may be stored within sub-networks of a decomposed P2P network based on other criteria in addition to the sub-network indices, such as based on popularity or any other suitable criteria. In one embodiment, a file popular within a particular sub-network (or even deemed to be popular across a particular number or set of sub-networks or even across the entire decomposed P2P network) may be stored in the local sub-network (in addition to be stored in the sub-network(s) having a sub-network index associated with the file). In one such embodiment, when a node searches for a file, the node will search its local sub-network as well as the sub-network(s) having a sub-network index associated with the file). In this case, if the file is stored in the local sub-network, the node performing the search will obtain the file from the local sub-network or, otherwise, from a sub-network that supports the sub-network index of the file. In a decomposed P2P network in which decomposition is (at least partially) based on geographic criteria, this will be efficient in terms of network costs, although may be more costly in terms of storage costs. In this embodiment, the file can be purged from the local sub-network (e.g., at some later time, such as when the popularity of the file wanes within the local sub-network or across the decomposed P2P network) while still remaining available from the sub-network(s) which support the sub-network index of the file. In such embodiments, it will be appreciated that the popularity may be measured or determined in any suitable manner.

Although primarily depicted and described herein with respect to embodiments in which the sub-network index is a K-bit field which is an output of a hash function, in other embodiments the sub-network indices associated with the sub-networks of a decomposed P2P network may be determined without using a hash function. In one such embodiment, for example, the sub-network indices of the sub-networks may be set using a natural index. As an example, consider the case of a library that would like to store books electronically in a P2P network. In this example, the sub-networks could be arranged by subject, such as a mathematics sub-network, a physics sub-network, and so forth. In this example, a natural index to use would be the Dewy Decimal System because, by using the Dewey Decimal System would naturally result in mathematics books being stored in the mathematics sub-network physics books being stored in the physics sub-network, and so forth. Additionally, books of interest to a particular department also could be stored in other sub-networks, such as where the physics department may want to store some of the mathematics books locally in the physics sub-network. Although primarily depicted and described with respect to use of the Dewey Decimal System, it will be appreciated that various other natural indices may be used in other types of applications.

The P2P network decomposition capability provides numerous benefits for P2P networks.

The P2P network decomposition capability, by enabling decomposition of P2P networks into sub-networks, improves scalability of P2P networks.

The P2P network decomposition capability improves file searching performance within P2P networks. When a node is searching for a file, the file may be located at a sub-network other than the local sub-network of the node, e.g., at a target sub-network other than the local sub-network. The first file search may travel from the local sub-network of the node to the target sub-network, however, all subsequent search messages required for locating the file will remain with the target sub-network. Thus, if decomposition of the P2P network is based on "distance", all of the search messages (except the first ones outside of the target network) are localized into the target sub-network and, thus, the distance traveled by the search messages is minimized. This will improve the performance of P2P networks in which geographic location is not accounted for in the architecture (e.g., such as Chord networks). This also will improve the performance of P2P networks which may support limited use of location/distance metrics because the location/distance metrics may be sub-network specific. For example, in Pastry networks, which support a proximity metric, the proximity metric only needs to be defined for nodes within the same sub-network. In this example, in the extreme case in which a sub-network covers a small geographic area the proximity metric in the sub-network can be set to a constant (i.e., all nodes within the sub-network have the same distance), which would ease the work of the network administrator to define the proximity function.

The P2P network decomposition capability is provided such that, with respect to node IDs, neighbors of a given node belong to the same sub-network. As a result, when nodes join or depart the network, update messages and file transfers between neighbors remain within the same sub-network. If decomposition of the P2P network is geographically based, distances traveled by the update messages and file transfers are minimized, thereby minimizing the time required to propagate such information between nodes and reducing the amount of network resources consumed for propagating such information between nodes. If decomposition is based on other decomposition criteria, other benefits are realized. Thus, performance of the P2P network is improved.

The P2P network decomposition capability enables P2P networks to be decomposed based on any suitable decomposition criteria, such as based on one or more of geography, community of interest, and the like, as well as various combinations thereof. This enables efficient and robust decomposition of P2P networks.

The P2P network decomposition capability enables each file to be stored at a designated sub-network and, optionally, also may enable some or all of the files to be stored in multiple sub-networks (e.g., an additional copy of a file can be stored at one or more sub-networks in addition to the designated sub-network). This improves the performance and reliability of the P2P network.

The P2P network decomposition capability provides numerous other benefits which will be apparent to one skilled in the art in view of the description of the P2P network decomposition capability provided herein.

Although primarily depicted and described herein with respect to embodiments in which the P2P network decomposition capability is provided using a control network, the P2P network decomposition also may be provided without using a control network. In one embodiment, for example, rather than using a control network, each of the sub-networks is configured to have one or more permanently active nodes where the identities of the permanently active nodes are made available to all of the nodes of the P2P network such that each of the nodes may search for nodes, services, and other control information. The identities of the permanently active nodes may be made available to all nodes in any suitable manner, such as providing an extension to the network map, via a web server, and the like.

Although primarily depicted and described herein with respect to embodiments in which the P2P network is a Chord network, the P2P network decomposition capability may be implemented within other types of P2P networks, such as Pastry, Tapestry, and the like.

Although a P2P network decomposition capability is primarily depicted and described herein, the principles of the P2P network decomposition capability also may be applied in order provide a P2P network merging capability for merging component P2P networks to form a merged P2P network. The merged P2P network is similar to a decomposed P2P network in that each of the component networks of the merged P2P network is similar to a sub-network of a decomposed P2P network. The component P2P networks may be of the same or different P2P technologies. When decomposing a P2P network, the P2P network may be decomposed such that all of the sub-networks use the same key space and the same object-ID hash function (as they are inherited from the original P2P network that is being decomposed). When merging component P2P networks to form a merged P2P network, however, it is likely that the component networks being merged use different key spaces and different object-ID hash functions. As a result, merging of component P2P networks to form a merged P2P network may be performing taking into account one or more of the following considerations.

For the P2P network merging capability, all of the component networks should use the same hash function in computing the network index (e.g., by selecting the hash function of one of the component networks or selecting some other suitable hash function to be used by the component networks).

For the P2P network merging capability, all of the component networks should support the same file naming convention, and when a node requests a file from another node in another component network, the filename of the file should be used instead of the hash value of the filename as the different component networks are likely to use different hash functions.

For the P2P network merging capability, the control network should use a P2P technology that supports a service location capability which allows each node to search for other nodes that belong to a particular component network (e.g., a Chord network having a service location capability as depicted and described in U.S. Patent Application Serial No. XX/XXX,XXX [Attorney Docket No. Chu 19-43 (ALU/130209)], entitled "METHOD AND APPARATUS FOR LOCATING SERVICES WITHIN PEER-TO-PEER NETWORKS," which is hereby incorporated by reference herein in its entirety.

For the P2P network merging capability, the component networks are likely to use different key spaces and different hash functions. When two component networks of the merged P2P network use different key spaces and hash functions, a node that joins both of the component networks will have two different node IDs and will store different files for the two component networks and, further, two nodes that are neighbors (with respect to node IDs) in one component network may not be neighbors in the other component network. As a result, when a component network is assigned a new network index it cannot use the above described procedure to populate the network quickly; rather, the files will be loaded into the component network through the associated seeding nodes.

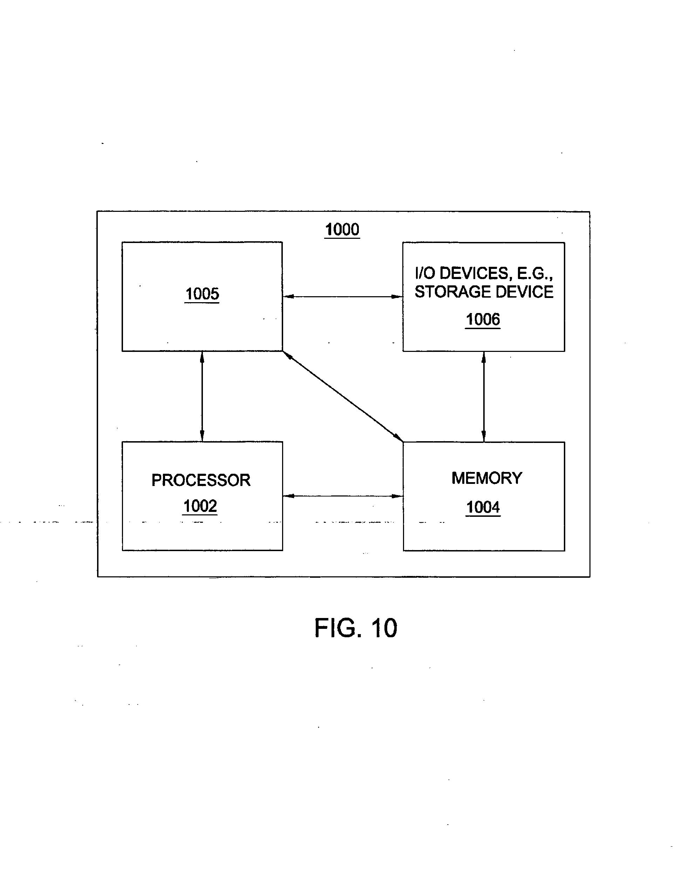

FIG. 10 depicts a high-level block diagram of a computer suitable for use in performing the functions described herein. As depicted in FIG. 10, computer 1000 includes a processor element 1002 (e.g., a central processing unit (CPU) or other suitable processor(s)), a memory 1004 ( e.g., random access memory (RAM), read only memory (ROM), and the like), a service location search module/process 1005, and various input/output devices 1006 (e.g., a user input device (such as a keyboard, a keypad, a mouse, and the like), a user output device (such as a display, a speaker, and the like), an input port, an output port, a receiver, a transmitter, and storage devices (e.g., a tape drive, a floppy drive, a hard disk drive, a compact disk drive, and then like)).

It should be noted that functions depicted and described herein may be implemented in software and/or in a combination of software and hardware, e.g., using a general purpose computer, one or more application specific integrated circuits (ASIC), and/or any other hardware equivalents. In one embodiment, a service location search process 1005 can be loaded into memory 1004 and executed by processor 1002 to implement the functions as discussed herein above. As such, service location search process 1005 (including associated data structures) can be stored on a computer readable storage medium or carrier, e.g., RAM memory, magnetic or optical drive or diskette, and the like.

It is contemplated that portions of the functions discussed herein that are implemented as software may be configured on the nodes of the peer-to-peer network in any suitable manner (e.g., provided during manufacturing of the nodes, administratively loaded at the node, downloaded from a web server or other suitable source, and the like, as well as various combinations thereof). It is contemplated that some of the steps discussed herein as software methods may be implemented within hardware, for example, as circuitry that cooperates with the processor to perform various method steps. Portions of the functions/elements described herein may be implemented as a computer program product wherein computer instructions, when processed by a computer, adapt the operation of the computer such that the methods and/or techniques described herein are invoked or otherwise provided. Instructions for invoking the inventive methods may be stored in fixed or removable media, transmitted via a data stream in a broadcast or other signal bearing medium, and/or stored within a memory within a computing device operating according to the instructions.

Aspects of the invention are specified in the claims. Those and other aspects of the invention are specified in the following numbered clauses:
1. A method for enabling a node to join a decomposed peer-to-peer (P2P) network comprising a plurality of sub-networks, the method comprising:
   propagating, toward a node requesting to join the decomposed P2P network, a network map comprising a mapping of a plurality of sub-network indices to the plurality of sub-networks of the decomposed P2P network.
2. The method of clause 1, further comprising:
   encoding the decomposition of the decomposed P2P network in the network map.
3. The method of clause 1, wherein the decomposition of the decomposed P2P network is based on at least one decomposition criteria.
4. The method of clause 3, wherein the at least one decomposition criteria comprises at least one of geographic locations of nodes and communities of interest.
5. The method of clause 1, wherein, for each of the sub-networks, the sub-network has one or more of the sub-network indices mapped thereto.
6. The method of clause 1, wherein the network map further comprises at least one of:
   hashing information adapted for use by the node in generating object identifiers for storing files in the decomposed P2P network or locating files in the decomposed P2P network;
   for each of the sub-networks, one or more descriptors adapted for use by the node in determining which of the sub-networks to join; and
   network map management information.
7. A method for enabling a node to join a decomposed peer-to-peer (P2P) network comprising a plurality of sub-networks, the method comprising:
   initiating, from the node, a message adapted for use in acquiring a network map of the decomposed P2P network; and
   receiving, at the node, the network map of the decomposed P2P network;
   wherein the network map comprises a mapping of a plurality of sub-network indices to the plurality of sub-networks of the decomposed P2P network.
8. The method of clause 7, wherein the request is initiated toward at least one of:
   at least one node of a control network of the decomposed P2P network; and
   a network device.
9. The method of clause 8, wherein, when the request is initiated toward at least one node of a control network of the decomposed P2P network, the request is initiated toward a predecessor node of the node in the control network or a successor node of the node in the control network.
10. The method of clause 7, wherein decomposition of the decomposed P2P network is based on at least one decomposition criteria.
11. The method of clause 10, wherein the at least one decomposition criteria comprises at least one of geographic locations of nodes and communities of interest.
12. The method of clause 7, wherein, for each of the sub-networks, the sub-network has one or more of the sub-network indices mapped thereto.
13. The method of clause 7, wherein the network map further comprises at least one of:
   hashing information adapted for use by the node in generating object identifiers for storing files in the decomposed P2P network or locating files in the decomposed P2P network;
   for each of the sub-networks, one or more descriptors adapted for use by the node in determining which of the sub-networks to join; and
   network map management information.
14. The method of clause 7, further comprising:
   initiating a request to join a control network of the decomposed P2P network, wherein the control network is a P2P network; and
   propagating the message adapted for use in acquiring a network map of the decomposed P2P network toward at least one node of the control network.
15. A method for enabling a node to manage a file in a decomposed peer-to-peer (P2P) network comprising a plurality of sub-networks, the method comprising:
   computing a sub-network index of the file;
   identifying one of the sub-networks associated with the sub-network index of the file;
   identifying an active node of the identified one of the sub-networks; and
   initiating a process for using the active node to manage the file in the decomposed P2P network.
16. The method of clause 15, wherein the sub-network index of the file is computed using a hash function and a filename of the file.
17. The method of clause 15, wherein, when multiple of the sub-networks are identified as being associated with the sub-network index of the file, active nodes of each of the multiple sub-networks are identified and the process for managing the file is initiated in a manner for using each of the identified active nodes of the multiple sub-networks to manage the file.
18. The method of clause 15, wherein identifying one of the sub-networks associated with the sub-network index of the file comprises:
   searching a network map using the sub-network index of the file;
   wherein the network map comprises, for each of the sub-networks, a mapping of the sub-network to one or more sub-network indices.
19. The method of clause 15, wherein managing the file comprises storing the file in the decomposed P2P network.
20. The method of clause 19, wherein the process for managing the file comprises a process for causing the file to be stored on the identified active node of the identified one of the sub-networks.
21. The method of clause 20, further comprising:
   propagating the file toward the active node of the identified one of the sub-networks.
22. The method of clause 19, further comprising:
   initiating a process for causing the file to be stored in one of the sub-networks of which the node is a member.
23. The method of clause 15, wherein managing the file comprises locating the file in the decomposed P2P network.
24. The method of clause 23, wherein the process for managing the file comprises a process for using the active node to search for the file in the identified one of the sub-networks.
25. The method of clause 24, wherein initiating the process for using the active node to search for the file in the identified one of the sub-networks comprises:
   propagating, toward the active node, a request for the active node to search for the file in the identified one of the sub-networks.

Although various embodiments which incorporate the teachings of the present invention have been shown and described in detail herein, those skilled in the art can readily devise many other varied embodiments that still incorporate these teachings.

## Claims

1. A method for enabling a node to join a decomposed peer-to-peer, P2R, network (200) comprising a plurality of sub-networks (204₁, 204₂, 204₃), the method comprising:
propagating, toward a node requesting to join the decomposed P2P network (200), a network map comprising a mapping of a plurality of sub-network indices to the plurality of sub-networks (204₁, 204₂, 204₃) of the decomposed P2P network (200),
wherein the decomposition of the decomposed P2P network (200) being based on at least one decomposition criteria and the at least one decomposition criteria comprising at least, geographic locations of nodes
whereby the decomposition of a global P2P network (200) being performed by grouping nodes into sub-networks (204₁, 204₂, 204₃) based on the continent on which the nodes are located, and
wherein the request is initiated toward at least one node of a control network (202) of the decomposed P2P network (200), wherein the at least one node comprises at least one of a predecessor node of the node in the control network (202) or a successor node of the node in the control network (202).

2. The method of claim 1,
further comprising:
encoding the decomposition of the decomposed P2P network (200) in the network map.

3. The method of claim 1,
wherein the at least one decomposition criteria comprises at least one of communities of interest.

4. The method of claim 1,
wherein, for each of the sub-networks (204₁, 204₂, 204₃), the sub-network (204₁, 204₂, 204₃) has one or more of the sub-network indices mapped thereto.

5. The method of claim 1,
wherein the network map further comprises at least one of:
hashing information adapted for use by the node in generating object identifiers for storing files in the decomposed P2P network (200) or locating files in the decomposed P2P network (200);
for each of the sub-networks (204₁, 204₂, 204₃), one or more descriptors adapted for use by the node in determining which of the sub-networks (204₁, 204₂, 204₃) to join; and
network map management information.

6. The method of claim 1,
comprising:
initiating, from the node, a message adapted for use in acquiring a network map of the decomposed P2P network (200); and
receiving, at the node, the network map of the decomposed P2P network (200);
wherein the network map comprises a mapping of a plurality of sub-network indices to the plurality of sub-networks (204₁, 204₂, 204₃) of the decomposed P2P network (200).

7. The method of claim 6,
wherein the at least one decomposition criteria comprises at least one of communities of interest.

8. The method of claim 6,
wherein the network map further comprises at least one of:
hashing information adapted for use by the node in generating object identifiers for storing files in the decomposed P2P network or locating files in the decomposed P2P network;
for each of the sub-networks, one or more descriptors adapted for use by the node in determining which of the sub-networks to join; and
network map management information.

9. A method for enabling a node to manage a file in a decomposed peer-to-peer, P2P, network (200) comprising a plurality of sub-networks (204₁, 204₂, 204₃), the method comprising:
computing a sub-network index of the file;
identifying one of the sub-networks (204₁, 204₂, 204₃) associated with the sub-network index of the file;
identifying an active node of the identified one of the sub-networks (204₁, 204₂, 204₃); and
initiating a process for using the active node to manage the file in the decomposed P2P network (200),
wherein the decomposition of the decomposed P2P network (200) being based on at least one decomposition criteria and the at least one decomposition criteria comprising at least, geographic locations of nodes
whereby the decomposition of a global P2P network (200) being performed by grouping nodes into sub-networks (204₁, 204₂, 204₃) based on the continent on which nodes are located, and
wherein a request being initiated toward at least one node of a control network (202) of the decomposed P2P network (200) for joining the decomposed peer-to-peer, P2P, network (200), and the at least one node comprises at least one of a predecessor node of the node in the control network (202) or a successor node of the node in the control network (202).

## Patentansprüche

1. Verfahren, welches es einem Knotens ermöglicht, sich einem zerlegten Peer-to-Peer- bzw. P2P-Netzwerk (200) mit einer Vielzahl von Teilnetzwerken (204₁, 204₂, 204₃) anzuschließen, wobei das Verfahren umfasst:
Propagieren, an einen Knoten, welcher den Anschluss an das zerlegte P2P-Netzwerk (200) anfordert, einer Netzwerk-Map mit einer Abbildung einer Vielzahl von Teilnetzwerk-Indizes für die Vielzahl von Teilnetzwerken (204₁, 204₂, 204₃) des zerlegten P2P-Netzwerks (200),
wobei die Zerlegung des zerlegten P2P-Netzwerks (200) auf mindestens einem Zerlegungskriterium basiert, und wobei das mindestens eine Zerlegungskriterium zumindest geografische Positionen von Knoten umfasst,
wobei die Zerlegung eines globalen P2P-Netzwerks (200) durch Gruppieren von Knoten in Teilnetzwerke (204₁, 204₂, 204₃) auf der Basis des Kontinents, auf welchem sich die Knoten befinden, durchgeführt wird, und
wobei die Anforderung an mindestens einen Knoten eines Steuerungsnetzwerks (202) des zerlegten P2P-Netzwerks (200) initiiert wird, wobei der mindestens eine Knoten zumindest entweder einen Vorgängerknoten des Knotens in dem Steuerungsnetzwerk (202) oder einen Nachfolgerknoten des Knotens in dem Steuerungsnetzwerk (202) umfasst.

2. Verfahren nach Anspruch 1,
weiterhin umfassend:
Codieren der Zerlegung des zerlegten P2P-Netzwerks (200) in der Netzwerk-Map.

3. Verfahren nach Anspruch 1,
wobei das mindestens eine Zerlegungskriterium mindestens eine der Interessengemeinschaften umfasst.

4. Verfahren nach Anspruch 1,
wobei, für jedes der Teilnetzwerke (204₁, 204₂, 204₃), ein oder mehrere der Teilnetzwerk-Indizes auf dem Teilnetzwerk (204₁, 204₂, 204₃) abgebildet sind.

5. Verfahren nach Anspruch 1,
wobei die Netzwerk-Map weiterhin zumindest eines der folgenden umfasst:
Hashing-Informationen, welche für die Verwendung, durch den Knoten, zur Erzeugung von Objektkennungen zur Speicherung von Dateien in dem zerlegten P2P-Netzwerk (200) oder zur Lokalisierung von Dateien in dem zerlegten P2P-Netzwerk (200) geeignet sind;
für ein jedes der Teilnetzwerke (204₁, 204₂, 204₃), einen oder mehrere Deskriptoren, welche für die Verwendung, durch den Knotens, zur Bestimmung, welchem der Teilnetzwerke (204₁, 204₂, 2043) er sich anschließen soll, geeignet sind; und
Informationen für die Verwaltung der Netzwerk-Map.

6. Verfahren nach Anspruch 1,
umfassend:
Initiieren, ab dem Knoten, einer Nachricht, welche für die Verwendung zur Erwerbung einer Netzwerk-Map des zerlegten P2P-Netzwerks (200) geeignet ist; und
Empfangen, an dem Knoten, der Netzwerk-Map des zerlegten P2P-Netzwerks (200);
wobei die Netzwerk-Map eine Abbildung einer Vielzahl von Teilnetzwerk-Indizes für die Vielzahl von Teilnetzwerken (204₁, 204₂, 204₃) des zerlegten P2P-Netzwerks (200) umfasst.

7. Verfahren nach Anspruch 6,
wobei das mindestens eine Zerlegungskriterium mindestens eine der Interessengemeinschaften umfasst.

8. Verfahren nach Anspruch 6,
wobei die Netzwerk-Map weiterhin zumindest eines der folgenden umfasst:
Hashing-Informationen, welche für die Verwendung, durch den Knoten, zur Erzeugung von Objektkennungen zur Speicherung von Dateien in dem zerlegten P2P-Netzwerk oder zur Lokalisierung von Dateien in dem zerlegten P2P-Netzwerk geeignet sind;
für ein jedes der Teilnetzwerke, einen oder mehrere Deskriptoren, welche für die Verwendung, durch den Knoten, zur Bestimmung, welchem der Teilnetzwerke er sich anschließen soll, geeignet sind; und
Informationen für die Verwaltung der Netzwerk-Map.

9. Verfahren, welches es einem Knoten ermöglicht, eine Datei in einem zerlegten Peer-to-Peer- bzw. P2P-Netzwerk (200) mit einer Vielzahl von Teilnetzwerken (204₁, 204₂, 204₃) zu verwalten, wobei das Verfahren umfasst:
Berechnen eines Teilnetzwerk-Index der Datei;
Identifizieren eines der Teilnetzwerke (204₁, 204₂, 204₃), welches mit dem Teilnetzwerk-Index der Datei assoziiert ist;
Identifizieren eines aktiven Knotens des identifizierten einen der Teilnetzwerke (204₁, 204₂, 204₃); und
Initiieren eines Prozesses zur Verwendung des aktiven Knotens für die Verwaltung der Datei in dem zerlegten P2P-Netzwerk (200),
wobei die Zerlegung des zerlegten P2P-Netzwerks (200) auf mindestens einem Zerlegungskriterium basiert, und wobei das mindestens eine Zerlegungskriterium zumindest geografische Positionen von Knoten umfasst,
wobei die Zerlegung eines globalen P2P-Netzwerks (200) durch Gruppieren von Knoten in Teilnetzwerke (204₁, 204₂, 204₃) auf der Basis des Kontinents, auf welchem sich die Knoten befinden, durchgeführt wird, und
wobei eine Anforderung für den Anschluss an das zerlegte Peer-to-Peer- bzw. P2P-Netzwerk (200) an mindestens einen Knoten eines Steuerungsnetzwerks (202) des zerlegten P2P-Netzwerks (200) initiiert wird, und wobei der mindestens eine Knoten zumindest entweder einen Vorgängerknoten des Knotens in dem Steuerungsnetzwerk (202) oder einen Nachfolgerknoten des Knoten in dem Steuerungsnetzwerk (202) umfasst.

## Revendications

1. Procédé permettant à un noeud de rejoindre un réseau poste à poste, P2P, décomposé (200) comprenant une pluralité de sous-réseaux (204₁, 204₂, 204₃),
le procédé comprenant les étapes suivantes :
propager, vers un noeud demandant à rejoindre le réseau P2P décomposé (200), une carte réseau comprenant une mise en correspondance d'une plurality d'indices, de sous-réseaux avec la pluralité de sous-réseaux (204₁, 204₂, 204₃) du réseau P2P décomposé (200),
la décomposition du réseau P2P décomposé (200) étant basée sur au moins un critère de décomposition et l'au moins un critère de décomposition comprenant au moins des emplacements géographiques de noeuds
la décomposition d'un réseau P2P global (200) étant réalisée en regroupant des noeuds en sous-réseaux (204₁, 204₂, 204₃) en fonction du continent sur lequel les noeuds sont situés, et
la demande étant envoyée à au moins un noeud d'un réseau de commande (202) du réseau P2P décomposé (200), l'au moins un noeud comprenant au moins un noeud parmi un noeud prédécesseur du noeud dans le réseau de commande (202) ou un rioeud successeur du noeud dans le réseau de commande (202).

2. Procédé selon la revendication 1,
comprenant en outre l'étape suivante :
coder la décomposition du réseau P2P décomposé (200) dans la carte réseau.

3. Procédé selon la revendication 1,
l'au moins un critère de décomposition comprenant au moins une des communautés d'intérêt.

4. Procédé selon la revendication 1,
dans lequel, pour chacun des sous-réseaux (204₁, 204₂, 204₃), le sous-réseau (204₁, 204₂, 204₃) présenté un ou plusieurs des indices de sous-réseaux mis en correspondance avec celui-ci.

5. Procédé selon la revendication 1,
dans lequel la carte réseau comprend en outre :
des informations de hachage adaptées pour être utilisées par le noeud dans la création d'identificateurs d'objet pour stocker des fichiers dans le réseau P2P décomposé (200) ou pour localiser des fichiers dans le réseau P2P décomposé (200) ;
pour chacun des sous-réseaux (204₁, 204₂, 204₃), un ou plusieurs descripteurs adaptés pour être utilisés par le noeud pour déterminer lequel des sous-réseaux (204₁, 204₂, 204₃) rejoindre ; et/ou des informations de gestion de carte réseau.

6. Procédé selon la revendication 1,
comprenant les étapes suivantes :
envoyer, à partir du noeud, un message adapté pour être utilisé dans l'acquisition d'une carte réseau du réseau P2P décomposé (200) ; et
recevoir, au niveau du noeud, la carte réseau du réseau P2P décomposé (200) ;
dans lequel la carte réseau comprend une mise en correspondance d'une pluralité d'indices de sous-réseau avec la pluralité de sous-réseaux (204₁, 204₂, 204₃) du réseau P2P décomposé (200).

7. Procédé selon la revendication 6,
l'au moins un critère de décomposition comprenant au moins une des communautés d'intérêt.

8. Procédé selon la revendication 6,
dans lequel la carte réseau comprend en outre :
des informations de hachage adaptées pour être utilisées par le noeud dans la création d'identificateurs d'objet pour stocker des fichiers dans le réseau P2P décomposé ou pour localiser des fichiers dans le réseau P2P décomposé ;
pour chacun des sous-réseaux, un ou plusieurs descripteurs adaptés pour être utilisés par le noeud pour déterminer lequel des sous-réseaux rejoindre ; et/ou des informations de gestion de carte réseau.

9. Procédé permettant à un noeud de gérer un fichier dans un réseau poste à poste, P2P, décomposé (200) comprenant une pluralité de sous-réseaux (204₁, 204₂, 204₃), le Procédé comprenant les étapes suivantes :
calculer un indice de sous-réseau du fichier ;
identifier un des sous-réseaux (204₁, 204₂, 204₃) associés à l'indice de sous-réseau du fichier ;
identifier un noeud actif du sous-réseau identifié parmi les sous-réseaux (204₁, 204₂, 204₃) ; et
lancer un processus pour utiliser le noeud actif pour gérer le fichier dans le réseau P2P décomposé (200),
la décomposition du réseau P2P décomposé (200) étant basée sur au moins un critère de décomposition et l'au moins un critère de décomposition comprenant au moins des emplacements géographiques de noeuds
la décomposition d'un réseau P2P global (200) étant réalisée en regroupant des noeuds en sous-réseaux (204₁, 204₂, 204₃) en fonction du continent sur lequel des noeuds sont situés, et
une demande étant envoyée à au moins un noeud d'un réseau de commande (202) du réseau P2P décomposé (200) pour rejoindre le réseau poste à poste, P2P, décomposé (200), et l'au moins un noeud comprenant au moins un noeud parmi un noeud prédécesseur du noeud dans le réseau de commande (202) ou un noeud successeur du noeud dans le réseau de commande (202).
